# EUROPEAN PATENT SPECIFICATION

(11) **EP 4 435 394 B1**
(45) Date of publication and mention of the grant of the patent: **24.12.2025**
(21) Application number: 23382271.7
(22) Date of filing: 23.03.2023
(51) Int. Cl.: G01K 1/143, G01K 7/16

(54) **PIPE WITH RESISTANCE TEMPERATURE DETECTION SENSOR**
ROHR MIT WIDERSTANDSTEMPERATURDETEKTIONSSENSOR
TUYAU AVEC CAPTEUR DE DÉTECTION DE TEMPÉRATURE DE RÉSISTANCE

(43) Date of publication of application: 25.09.2024
(73) Proprietor: TUBACEX INNOVATION, S.L., 48160 Derio - Vizcaya (ES)
(72) Inventor: Bikarregi, Aitor, 48160 Derio - Vizcaya (ES); Astigarraga, Victoria, 48160 Derio - Vizcaya (ES); López, Alejandra, 48160 Derio - Vizcaya (ES)
(74) Representative: Balder IP Law, S.L.

(56) References cited:
- EP-A1- 3 842 566
- US-B2- 7 968 804

## Description

### TECHNICAL FIELD OF THE INVENTION

The present invention relates to a process for providing at least one resistance temperature detection sensor onto at least one surface of a pipe, thus belonging to the technical field of pipes and, more particularly, of pipes made of an electrically conductive material having at least one resistance temperature detection sensor onto at least one of its surfaces. The present invention also relates to the pipe obtained by said process.

### BACKGROUND OF THE INVENTION

Resistance temperature detection sensors (i.e., RTD sensors) are suitable for measuring the temperature of a fluid material (i.e., a liquid material or a gas material) which is circulating in a closed system such as, for example, a pipe. Pipes are widely used across different industrial fields for transportation of fluid materials, and monitoring of those processes may become of upmost importance to ensure their efficiency and also detect and/or prevent unexpected event that may occur during that transportation.

There is an intrinsic complexity in the fabrication of RTD sensors for a number of reasons. Firstly, it is particularly difficult to reliably attach a sensor, which typically comprises at least one temperature sensing layer, to the pipe due the curved nature of the pipe surfaces. Besides, sometimes its hard to provide the sensor on the pipe in such a way that measurements can be easily retrieved.

There exist a number of solutions in the state of the art which are aimed at overcoming the difficulties associated with the fabrication of devices onto curved substrates, more particularly of the fabrication of temperature sensing layers, which may be used as/for RTD sensors, onto at least one surface of a pipe. By way of illustration, these known solutions are typically based on a first manufacturing of the device on a planar substate followed by its transfer to a curved surface (*e.g.*, by transfer printing), so that significant adhesion problems may occur on transferring the already manufactured device onto the curved substrate.

Other known solutions involve the use of a flexible mask and stepped rotating lithography using a metal roller, wherein micropatterns are fabricated onto curved substrates using metal electroplating. However, such rotating lithography also entails a number of drawbacks, such as the difficulty to fabricate micropatterns of a certain size due to discontinuous exposure, or the irregularities that may be caused by the metal roller itself, if rotation is not critically controlled.

Additionally, the use of electroplating typically necessarily requires a conductive surface and the application of an electric current to bind the metal particles onto a substrate.

Another technical solution known in the art for producing RTD sensors is based on the use of post-masking techniques. These techniques are mainly based on depositing a sensing layer onto an electrically isolating layer over a substrate of interest, which is then masked with a positive mask and, once photolithography has been carried out, it is then subject to a chemical attack (also known as *chemical milling* or *etching*) wherein those portions of the deposited material which were not protected by the mask are removed. That chemical attack is typically carried out with iron chloride (FeCl₃). However, while post-masking techniques might appear to be suitable for fabricating at least one RTD sensor or at least one temperature sensing layer onto the surface of a curved substrate, they suffer from different drawbacks. In particular, the solutions employed for carrying out that chemical attack are usually highly corrosive, so they may even destroy the electrically isolating layer onto which the at least one temperature sensing layer is deposited. Furthermore, these reagents, and particularly FeCl₃ which is one of the most widely employed etching reagents in the art, require additional measures from the point of view of waste treatment and management, due to their corrosive and/or toxic nature.

Other prior art solutions for providing at least one temperature sensing layer or RTD sensor onto the surface of a curved substrate, in particular a pipe, may require, prior to the at least one temperature sensing layer deposition, the functionalization of the area of interest. This is typically performing by treating that area with a strong inorganic acid, such as hydrofluoric acid. Once again, though, this solution also involves using highly corrosive reagents, which increase complexity of the process at industrial scale for that reason, as they require specific corrosion-resistance equipment, advanced residue management requirements as a result of their extreme acidity, or even the additional personnel safety training and measures being put in place.

EP3842566A1 discloses a method for providing a resistance temperature detection sensor on a pipe by means of a physical vapor deposition (PVD). In order to provide said resistance temperature detection sensor, the pipe is arranged in a vacuum chamber, a sensor layer is added on an outer surface by PVD or chemical vapor deposition (CVD) while the pipe is in the vacuum chamber, a protective layer is added to at least a portion of the sensor layer.

Due to all these existing problems and limitations in the art, there exists the need for a technical solution which provides an easier way to provide at least one RTD sensor onto at least one surface of a pipe, which may be used for accurately measuring the temperature of fluid material circulating inside that pipe.

### SUMMARY OF THE INVENTION

In a first aspect of the invention, it is provided a process for providing at least one RTD sensor onto at least one surface of a pipe, wherein the pipe is made of an electrically conductive material, and wherein the process comprises the steps of:
(a) providing the pipe, wherein at least a portion of the at least one surface of the pipe onto which at least one temperature sensing layer is to be manufactured is or has been coated with at least one electrically isolating layer to form at least one coated surface;
(b) forming a removable pattern upon the at least one coated surface of the pipe by a lithography process, wherein the removable pattern defines an area of interest wherein a temperature sensing layer is to be formed upon the at least one coated surface of the pipe;
(c) functionalizing the area of interest defined in step (b), wherein the functionalization step comprises:
   subjecting the area of interest defined in step (b) to a silanization treatment, wherein the silanization treatment comprises applying at least one silanization agent onto the area of interest; and
   wherein the silanization treatment further comprises a subsequent step of drying and/or curing the area of interest;
(d) depositing a solution comprising a catalyst metal source and a protecting agent onto the functionalized defined area of interest resulting from step (c) to obtain a catalytically active defined area of interest; and
(e) forming at least one temperature sensing layer over the catalytically active defined area of interest resulting from step (d) by electroless metal plating.

With the process of the invention, it has been advantageously possible to overcome existing problems in the art since, for example, no previous manufacturing of at least one sensing layer on a planar surface is required, but it can be directly fabricated onto the pipe. Furthermore, the process of the invention avoids the use of highly corrosive and/or toxic etching compounds, such as FeCl₃ which is typically employed in post-masking techniques, which may degrade or even destroy the electrically isolating layer onto which the at least one temperature sensing layer is fabricated.

According to a second aspect of the invention, it is provided a pipe which is made of an electrically conductive material, wherein the pipe comprises at least one RTD sensor onto at least one of its surfaces, and wherein the pipe is obtained or obtainable by the process according to the first aspect of the invention.

### BRIEF DESCRIPTION OF THE DRAWINGS

**FIG. 1, 2** **and** **3** show different views of a pipe in accordance with an embodiment of the invention.
**FIG. 4** shown a section of a resistance temperature detection sensor (RTD) onto a pipe, in accordance with an embodiment of the invention.
**FIG. 5** includes schematic images (*i.e.*, images **5-A** to **5-I**) showing an embodiment of the process according to the invention.
**FIG. 6** shows, in block diagram form, a process for providing at least one resistance temperature detection (RTD) sensor onto at least one surface of a pipe, wherein the pipe is made of an electrically conductive material, according with embodiments of the invention.
**FIG. 7** shows, in block diagram form, a method in accordance with embodiments of the invention, more particularly, a method in accordance with step (b) of the process of the invention.

### DETAILED DESCRIPTION OF THE INVENTION

According to a first aspect of the invention, it is provided a process for providing at least one RTD sensor onto at least one surface of a pipe, wherein the pipe is made of an electrically conductive material, and wherein the process comprises the steps of:
(a) providing the pipe, wherein at least a portion of the at least one surface of the pipe onto which at least one temperature sensing layer is to be manufactured is or has been coated with at least one electrically isolating layer to form at least one coated surface;
(b) forming a removable pattern upon the at least one coated surface of the pipe by a lithography process, wherein the removable pattern defines an area of interest wherein at least one temperature sensing layer is to be formed upon the at least one coated surface of the pipe;
(c) functionalizing the area of interest defined in step (b), wherein the functionalization step comprises:
   subjecting the area of interest defined in step (b) to a silanization treatment, wherein the silanization treatment comprises applying at least one silanization agent onto the area of interest; and
   wherein the silanization treatment further comprises a subsequent step of drying and/or curing the area of interest;
(d) depositing a solution comprising a catalyst metal source and a protecting agent onto the functionalized defined area of interest resulting from step (c) to obtain a catalytically active defined area of interest; and
(e) forming at least one temperature sensing layer over the catalytically active defined area of interest resulting from step (d) by electroless metal plating.

The expression "electrically conductive material" as used in the context of the present invention shall be preferably understood as referring to a material having a conductivity at room temperature (*i.e.*, 20°C) which is equal to or greater than 1.0·10⁴ S·m⁻¹.

The pipe made of an electrically conductive material may preferably be a pipe of an electrically conductive metallic or alloy material, such as steel, copper, nickel, aluminum, titanium, etc. Preferably, the pipe is made of steel or steel material, e.g., the pipe may be of stainless steel (*i.e.,* a stainless-steel pipe).

The expression "surface of a pipe" or "surface of the pipe", as used in the context of the present invention, shall be understood as referring to the outer surface or the inner surface of the pipe. Preferably, the expression "surface of a pipe" or "surface of the pipe", as used in the context of the present invention, shall be understood as referring to the outer surface of the pipe.

According to one embodiment, the process may be employed for providing a single RTD sensor onto at least one surface of the pipe made of an electrically conductive material or a plurality of RTD sensors onto at least one surface of the pipe made of an electrically conductive material. In a particular embodiment, the process may be employed for providing a single RTD sensor onto the outer surface of the pipe made of an electrically conductive material or a plurality of RTD sensors onto the outer surface of the pipe made of an electrically conductive material. In another particular embodiment, the process may be employed for providing a single RTD sensor onto the inner surface of the pipe made of an electrically conductive material or a plurality of RTD sensors onto the inner surface of the pipe made of an electrically conductive material. According to another embodiment, if the process is employed for providing a plurality of RTD sensors, the quantity of RTD sensors may be equally distributed between the outer and inner surfaces of the pipe made of an electrically conductive material or, alternatively, they may be distributed between the outer and inner surfaces of the pipe made of an electrically conductive material in such a way that a higher quantity of RTD sensors may be provided onto one of the surfaces, compared to the quantity of RTD sensors which may be provided onto the other surface.

Since the pipe is made of an electrically conductive material (*e.g.*, a stainless steel pipe), according to the process of the invention, it is therefore necessary that at least the portion of the surface(s) of the pipe onto which the at least one temperature sensing layer is to be manufactured is coated or has been coated with at least one electrically isolating layer; that is, such coating step may be understood as being carried out either as part of the process of the invention as such, in particular in step (a) of the process or, alternatively, it may be understood as having been carried out before the process such, according to the first aspect of the invention, takes place, so necessarily before step (a). In the absence of such coating, the at least one temperature sensing layer would be directly deposited onto the pipe, in which case any current being applied for temperature sensing purposes would transfer to the pipe, therefore resulting in detrimental interferences during measurements which would render the temperature sensing layer(s) useless.

In another embodiment, at least the portion of the surface(s) of the pipe onto which the at least one temperature sensing layer is to be manufactured is coated or has been coated with a plurality of electrically isolating layers.

In all the above embodiments, the at least one surface of the pipe provided in step (a) is coated or has been coated with at least one electrically isolating layer to an extent corresponding to at least the portion of the surface(s) of the pipe onto which the at least one temperature sensing layer is to be manufactured. It will become apparent, though, that while these embodiments provide more cost-effective solutions, since said coating may be specifically added or applied only onto at least the portion of the pipe onto which the at least one temperature sensing layer is to be manufactured, it may also be possible to more extensively coat the surface(s) of the pipe. By way of illustration, in step (a), a pipe may be provided, wherein the majority (*i.e.*, more than 50% of the total area), of the at least one surface of the pipe onto which the at least one temperature sensing layer is to be manufactured is coated or has been coated with at least one electrically isolating layer to form at least one coated surface; in another embodiment, in step (a), a pipe may be provided, wherein essentially all the at least one surface of the pipe onto which the at least one temperature sensing layer is to be manufactured is coated or has been coated with at least one electrically isolating layer to form at least one coated surface.

Because the at least one electrically isolating layer is provided onto at least the portion of the pipe onto which the at least one temperature sensing layer is to be manufactured, the temperature of the at least one temperature sensing layer may change in accordance with the temperature of the pipe and the fluid material flowing therein. Thus, by measuring the electrical resistance of the at least one temperature sensing layer, the temperature of the fluid flowing within the pipe can be determined.

In some embodiments, the at least one electrically isolating layer may comprise or consist of one or more (*i.e.,* a combination) of the following electrically isolating materials: Al₂O₃, ZrO₂, Y₂O₃, MgO, Ti₂O₃, AIN, SiO₂, Si₃N₄, borosilicate glass, mica and tetrafluoroethylene polymers (*e.g.*, Teflon^{®}). According to one embodiment, the at least one electrically isolating layer is selected from the group consisting of Al₂O₃, ZrO₂, Y₂O₃, MgO, Ti₂O₃, AlN, SiO₂, Si₃N₄, borosilicate glass, mica, tetrafluoroethylene polymers and any mixture thereof. In another embodiment, the at least one electrically isolating layer is selected from the group consisting of Al₂O₃, ZrO₂, Y₂O₃, MgO, Ti₂O₃, AIN, SiO₂, Si₃N₄, borosilicate glass and any mixture thereof. In a preferred embodiment, the at least one electrically isolating layer is selected from the group consisting of Al₂O₃, ZrO₂, Y₂O₃, MgO, Ti₂O₃, SiO₂, borosilicate glass and any mixture thereof. Preferred electrically isolating layers are those with very low conductivity coefficients, namely, with a conductivity coefficient in the range from 10⁻¹¹ to 10⁻¹⁶ S·m⁻¹.

In an embodiment, the at least one electrically isolating layer may be a dielectric material, preferably a dielectric ceramic material and, more preferably, the at least one electrically isolating layer may be a dielectric ceramic material which is selected from the group consisting of Al₂O₃, ZrO₂, Y₂O₃, MgO, Ti₂O₃, SiO₂, borosilicate glass and any mixture thereof. Dielectric ceramic materials are particularly advantageous for use as electrically isolating layers because not only can they withstand high temperatures (e.g., 100-200°C), but they are inert to corrosive compounds as well.

In some embodiments, the at least one surface of the pipe provided in step (a) may be coated or have been coated with at least one electrically isolating layer. Examples of suitable pipes to be used in step (a) of the process according to the first aspect of the invention, which have been coated with at least one electrically isolating layer to form at least one coated surface include commercially available Tubacoat^{®} (manufactured by Tubacex Group) pipe, which is a pipe coated with a dielectric ceramic material generally consisting of borosilicate glass.

The coating with an electrically isolating layer of at least the portion(s) of the surface(s) of the pipe onto which the temperature sensing layer(s) is/are to be manufactured may be carried out by known methods such as sol-gel deposition, physical vapor deposition (PVD), chemical vapor deposition (CVD) or thermal spraying. In a preferred embodiment, said coating with an electrically isolating material may be carried out by a particular type of PVD which is sputtering, still even more particularly, magnetron sputtering. Other PVD methods that may be used to apply or add the coating include, but are not limited to, laser ablation (also known as pulsed laser deposition or PLD), wherein a high-energy laser blasts a vaporized target material to the substrate wherein it is then deposited. CVD methods that may be used to apply or add the coating include, but are not limited to, atomic layer deposition (ALD), which is a film deposition technique based on sequential use of self-terminating gas-solid reactions.

Furthermore, the electrically isolating layer must have a thickness which is sufficient to substantially coat (i.e., not leave any uncovered spot) at least the portion(s) of the surface(s) of the pipe onto which the temperature sensing layer(s) is/are to be manufactured. Preferably, the electrically isolating layer may have a thickness which is equal to or higher than 2 microns, such as 3 microns, 10 microns, 20 microns, 30 microns or 50 microns; or it may have a thickness which is higher than 3 microns, 10 microns, 20 microns, 30 microns or 50 microns. In other embodiments, the electrically isolating layer may have a preferred thickness which is equal to or less than 250 microns, *e.g.*, equal to or less than 200 microns, equal to or less than 100 microns or less, etc. The electrically isolating layer may preferably have an arithmetic mean roughness (Rₐ) which is equal to or higher than 0.05 microns in order to ensure a proper adhesion of the at least one temperature sensing layer which is to be later fabricated during the process according to this first aspect of the invention.

The process according to the first aspect of the invention may further comprise, before step (b), a surface treatment of at least the coated surface of the pipe resulting from step (a) to prepare it for providing the at least one temperature sensing layer thereon, so that it remains reliably attached and defects are minimized, therefore increasing the effective life of the at least one temperature sensing layer and RTD sensors obtained therefrom. This treatment is typically aimed at cleaning the surface and/or increase its roughness, and also helps increasing the reactivity of the surface(s) over which the at least one temperature sensing layer is to be fabricated, by exposing the hydroxyl groups which are available on the surface(s).

The process according to the first aspect of the invention may further comprise, before step (b), a surface treatment step which comprises subjecting at least the coated surface(s) of the pipe resulting from step (a) to shot blasting, grit blasting, shot peening, tumbling or any combination thereof and, more preferably, to shot blasting.

The application of a surface treatment step only onto the coated surface(s) of the pipe resulting from step (a) is particularly advantageous to lower production costs and reduce the amount of residues that are produced during the process according to this first aspect of the invention, since it is not applied onto uncoated portions of the pipe. However, it will become apparent that the surface treatment may also be applied over a higher extent of the pipe surface(s), that is, over the uncoated portions of the pipe surface(s) in addition to over at least the coated surface(s) resulting from step (a), or even over the whole pipe surface(s).

By subjecting the coated surface(s) of the pipe resulting from step (a) to shot blasting, grit blasting, shot peening, tumbling or any combination thereof, it is then possible to make the surface(s) smoother and remove surface contaminants without chemically altering the surface, while at the same time allowing an increase of the effective surface roughness. Thus, this treatment step, which involves a mechanical treatment of at least the coated surface(s) of the pipe, may be particularly beneficial in case of a wrinkled surfaces.

In a particular embodiment, the surface treatment step may comprise subjecting the at least one coated surface of the pipe resulting from step (a) to shot blasting. Shot blasting is a mechanical treatment wherein a metal abrasive material, typically in the form of particles, is fired using a high-pressure spray (*e.g.*, a spray at 2-5 bar pressure, preferably at 3-5 bar pressure) onto a surface. Examples of metal abrasive materials which are typically employed for shot blasting include, but are not limited to, steel grit, copper shots, aluminum oxide pellets (*e.g.*, white corundum pellets). Suitable metal abrasive materials are those having a hardness which is equal to or greater than the hardness of the pipe, which are preferably in the form of particles. In some embodiments, the metal abrasive material has a hardness which is equal to or greater than the hardness of the pipe. The surface treatment step may comprise subjecting the coated surface of the pipe resulting from step (a) to shot blasting, wherein the shot blasting is carried out with a metal abrasive material, preferably with a metal abrasive material selected from the group consisting of steel grit, copper shots and aluminum oxide pellets. In a preferred embodiment, the surface treatment step may comprise subjecting the at least one coated surface of the pipe resulting from step (a) to shot blasting, wherein the shot blasting is carried out with a metal abrasive material which comprises or consists of aluminum oxide pellets, such as white corundum pellets.

Said metal abrasive materials and, in particular, said aluminum oxide pellets such as white corundum pellets, may have different particle sizes which may be chosen depending on the target effective surface roughness. In a particular embodiment, the metal abrasive materials (*e.g.*, aluminum oxide pellets such as white corundum pellets) may have a particle size in the range from 6.5 to 4750 microns, corresponding to a particle size in the range from F800 to F4 according to FEPA Grit nomenclature, which is the nomenclature defined by the Federation of European Producers of Abrasives (FEPA), widely employed in the technical field of abrasives. In a preferred embodiment, the surface treatment step may comprise subjecting the at least one coated surface of the pipe resulting from step (a) to shot blasting, wherein the shot blasting is carried out with a metal abrasive material, in particular comprising or consisting of aluminum pellets such as white corundum pellets, having a particle size in the range from 12.8 to 4750 microns (*i.e.* from F500 to F4 according to FEPA Grit nomenclature), from 12.8 to 2000 microns (*i.e.* from F500 to F10 according to FEPA Grit nomenclature), from 12.8 to 1000 microns (*i.e.* from F500 to F20 according to FEPA Grit nomenclature), from 9.3 to 300 microns (*i.e.* from F600 to F54 according to FEPA Grit nomenclature), from 9.3 to 150 microns (*i.e.* from F600 to F90 according to FEPA Grit nomenclature) or from 12.8 to 75 microns (*i.e.* from F500 to F150 according to FEPA Grit nomenclature). In some embodiments, the surface treatment step may comprise subjecting the at least one coated surface of the pipe resulting from step (a) to shot blasting, wherein the shot blasting is carried out with a metal abrasive material, in particular comprising or consisting of aluminum pellets such as white corundum pellets, wherein at least 90% (*i.e.* in a range from 90% to 100%) of the particles have a particle size of 12.8 microns (F500), 17.3 microns (F400), 22.8 microns (F360) or 53 microns (F220). It has been particularly found that white corundum particles (*e.g.*, F220 white corundum) result in good adhesion of the subsequently deposited layers.

The expression "particle size" as herein used in the context of the present invention shall be understood as referring to the particle diameter.

In another embodiment, the process according to the first aspect of the invention may further comprise, before step (b), carrying out a treatment step wherein at least the coated surface of the pipe resulting from step (a) is contacted with either an acid having a pKa value which is equal to or less than 4 or with a strong base. The expression "strong base" as herein employed shall be understood as referring to a base which is completely dissociated in water. Examples of acids having a pKa value which is equal to or less than 4 which may be suitable for carrying out the chemical treatment step include, but are not limited to, sulphuric acid, nitric acid, perchloric acid, hydrofluoric acid, hydrochloric acid, hydrobromic acid or hydroiodic acid. Examples of strong bases that may be suitable for carrying out that chemical treatment include, but are not limited to, alkaline metal hydroxides such as sodium hydroxide or potassium hydroxide, as well as alkaline earth metal hydroxides such as magnesium hydroxide. This optional chemical treatment provides an alternative to the above-indicated optional mechanical treatment which is mainly based on shot blasting, grit blasting, shot peening, tumbling or any combination thereof, the former being particularly useful for increasing surface reactivity by also exposing the hydroxyl groups found on the surface(s).

After this optional surface treatment step, drying of the coated surface(s) may be carried out, for example, by applying compressed dry air, in order to completely remove the residual amounts of any solvent that might have been employed during that surface treatment step.

The process according to the first aspect of the invention may further comprise, before carrying out the optional surface treatment step, and independently of whether said surface treatment step is based on a chemical or mechanical treatment, a prior cleaning step at least the coated surface(s) of the pipe resulting from step (a). Said prior cleaning step may comprise cleaning the coated surface(s) with paper and a solvent (e.g., water and/or acetone), and/or subjecting at least the coated surface(s) of the pipe resulting from step (a) to ultrasonic cleaning during a predetermined amount of time (*e.g.*, 15 minutes).

By "ultrasonic cleaning" shall be understood, in the context of the present invention, a cleaning step which involves the simultaneous use of ultrasounds and a cleaning solvent such as, for example, ethanol and/or acetone.

According to step (b) of the process, at least one removable pattern is formed upon the coated surface(s) of the pipe by a lithography process, wherein the removable pattern defines an area of interest wherein a at least one temperature sensing layer is to be formed upon the at least one coated surface of the pipe. Examples of lithography processes that may be suitable for carrying out step (b) of the process of the invention include, but are not limited to photolithography, such as UV photolithography, extreme UV (EUV) photolithography, lift-off photolithography, roll-to-roll UV imprinting lithography or ink-based lithography. In an embodiment, the lithography process of step (b) according to the invention is selected from the group consisting of UV photolithography and extreme UV (EUV) photolithography. Other known processes which may also be successfully employed for carrying out step (b) include, without being limited to, xylography, chalcography or serigraphy.

The choice of lithography process will typically depend on several factors such as the characteristics of the pattern which is to be created (e.g., mask geometry) or the properties of the light or radiation which is employed. For example, roll-to-roll UV photolithography is known to be particularly suitable for manufacturing a large batch of temperature sensing layers with a fixed geometry. On the other hand, while UV photolithography is based on characteristic wavelengths which typically are between 193 and 157 nm in the current state of the art, EUV photolithography already uses wavelengths typically in the range of 11 to 14 nm, thus making it possible to shrink the size of printed features while maintaining an excellent resolution, therefore being highly recommended when there exists the need to pattern the finest details on a surface.

The lithography process of step (b) may be carried out by means of lift-off photolithography, which is a particular type of photolithography that may involve the use of either UV or EUV light, therefore typically being also considered a particular type of UV or EUV photolithography, respectively. Lift-off photolithography involves depositing a photoresist material on the substrate, exposing the photoresist with the desired pattern so as to create a removable pattern onto the substrate which defines an area of interest over which material deposition takes place, developing the photoresist with unwanted regions thereof, coating the patterned photoresist with the active material which is to be patterned, and then removing the remaining photoresist, thus lifting off the unwanted regions of the material. After such lift-off, the patterned material is left in direct contact with the substrate, without any remaining photoresist.

In some embodiments, the lithography process in step (b) is a photolithography process which comprises the following steps:
- forming or positioning a photoresist layer (*i.e.*, a layer made of photoresist material) upon a portion of the coated surface(s) of the pipe, said photoresist layer comprising an uppermost surface furthest from the coated substrate(s) of the pipe and a lowermost surface in contact with the coated substrate(s) of the pipe;
- positioning a mask upon the uppermost surface of the photoresist layer, wherein the mask comprises at least one portion which is opaque to UV light, and at least one portion which is transparent to UV light;
- optically patterning the photoresist layer by subjecting it to an exposure step, wherein the photoresist layer is exposed to UV light through the mask;
- removing the mask; and
- developing the exposed photoresist layer by applying a photoresist developing agent (also known as developer) so as to provide at least one removable pattern upon the coated surface(s) of the pipe, wherein the at least one removable pattern defines an area of interest wherein the at least one temperature sensing layer is to be formed, wherein the area of interest comprises at least one patterned opening in the exposed photoresist layer, wherein the at least one patterned opening has sidewalls that extend substantially perpendicular to the coated surface(s) of the pipe, and wherein the patterned opening further comprises a lowermost region closest to the coated surface(s) of the pipe.

As regards the expression "substantially perpendicular", when used in the context of the invention for defining the relative position of the sidewalls of the patterned opening by reference to the coated surface(s) of the pipe, it is meant that the plane formed by each sidewall of the patterned opening is in a substantially right-angled position with the coated surface of the pipe. The term "substantially", as herein used, illustrates the fact that the technical feature (*i.e.,* the sidewalls of the patterned opening extending substantially perpendicular to the coated surface(s) of the pipe) may be produced within the technical tolerance of the process steps herein used, even though the skilled person would still consider that technical feature as being perpendicular.

It will become apparent that, when it may be desirable to obtain a particularly small patterning with high resolution (*e.g.* high resolution patterning with feature sizes below 22 nm), the same steps as above indicated may also be carried out to perform step (b), except for using a mask which comprises at least one portion which is opaque to EUV light and at least one portion which is transparent to EUV light, instead of UV light, for optically patterning the photoresist layer.

The width, length and/or size of the at least one patterned opening may be chosen depending on the intended end use for the at least one temperature sensing layer. Furthermore, by choosing a particular width and/or length of the patterned opening(s) which are fabricated, it will become apparent that is possible to modulate and thus tailor the electric response provided by the temperature sensing layer(s), as known in the art.

In a particular embodiment, the UV light source employed in step (b) may be, for example, light-emitting diodes (*i.e.*, LEDs), which advantageously provide better durability than conventional UV light sources (*e.g.*, UV lamp) employed in photolithography, do not require any additional equipment and allow their switching on and off several times in a row without getting damaged.

The term "photoresist" or the expression "photoresist material", as herein used, refer to a material comprising at least one light-sensitive polymer and optionally also at least one solvent and at least one sensitizer. The polymer changes its structure upon exposure to light, while the solvent allows the photoresist to be spun and form thin layers over the substrate, and the sensitizer - also typically known as the inhibitor - controls the photochemical reaction in the polymer phase.

Based on their reactivity when exposed to light, photoresist materials can be classified into two groups:
- Negative photoresists are those materials which, upon exposure to light, are further polymerized or cross-linked forming a hardened material which is resistant to etching solutions (*i.e.*, solutions employed to carry out a chemical attack). Thus, the negative photoresist remains on the surface of the substrate wherein it is exposed, and the developer (also known as photoresist developing agent) removes only the unexposed areas. Therefore, masks used for negative photoresists contain the inverse image of the pattern which is to be formed. Examples of negative photoresists include, but are not limited to, materials comprising cresol novolac resins or epoxy-based resins (*e.g.*, SU-8, KMPR^{®} 1000 from MCC) as light-sensitive polymers, methoxy propyl acetate, propylene glycol monomethyl ether acetate (PGMEA) or aromatic solvents (*e.g.*, toluene, xylene) as solvents, and diazides (*e.g.*, naphtoquinone diazide) or biazides as sensitizers. In a particular embodiment, the negative photoresist includes a dry film solder mask (DFSM) photoresist, which is an aqueous processible, dry film photopolymer mask based on epoxy-based resins, which is particularly well known for its chemical resistance and dimensional stability properties.
- Positive photoresists are those materials which, upon exposure to light, undergo decomposition, thus breaking down and becoming more soluble to the developer while, in contrast, their unexposed portions become hardened materials resistant to etching solutions. Thus, with the positive photoresist a positive pattern is achieved, and therefore the employed mask contains a substantially exact copy of the pattern, which is to remain on the substrate. Examples of positive photoresists include, but are not limited to, diazonaphtoquinone (DNQ)-novolac resins, wherein DNQ is the sensitizer and novolac provides the light-sensitive resin polymeric matrix; and polymethyl methacrylate (PPMA) as light-sensitive polymer.

Negative photoresists typically provide good adhesion to silicon-based substrates, as well as they also result in lower costs and shorter processing times than positive photoresists. In contrast, positive photoresists typically provide better resolution and enhanced thermal stability when compared to negative photoresists.

The term "mask" as herein used shall be understood as referring to a plate or film which comprises at least one portion which is opaque to the radiation employed - typically UV or EUV light - and at least one portion which is transparent to that same radiation. Preferably, the mask comprises at least a portion which is opaque to UV light, and at least one portion which is transparent to UV light. Suitable masks for photolithography that may be employed to carry out step (b) are typically be made of a silicon-based material such as quartz or glass, soda lime, polyester, or they may even be made of cellulose acetate. Furthermore, as already indicated, the shape of the mask will be dependent on whether a positive or negative photoresist is used. Thus, a mask having an exact copy of the pattern will be employed when a positive photoresist is employed, whereas a mask having the inverse image of the pattern which is to be formed shall be used in case of a negative photoresist. Furthermore, once the optical patterning has been carried out, the mask is removed and may be reused in subsequent photolithography processes.

In some embodiments, the lithography process carried out in step (b) of the process according to the first aspect of the invention may comprise the following steps:
- forming or positioning a negative photoresist layer, preferably a negative photoresist layer comprising a dry film solder mask (DFSM) photoresist, upon a portion of the coated surface(s) of the pipe, said photoresist layer comprising an uppermost surface furthest from the coated substrate(s) of the pipe and a lowermost surface in contact with the coated substrate(s) of the pipe;
- positioning a mask, preferably a cellulose acetate mask, upon the uppermost surface of the photoresist layer, wherein the mask comprises at least one portion which is opaque to UV light, and at least one portion which is transparent to UV light;
- optically patterning the photoresist layer by subjecting it to an exposure step, wherein the photoresist layer is exposed to UV light through the mask;
- removing the mask; and
- developing the exposed photoresist layer by applying a photoresist developing agent (also known as developer) so as to provide at least one removable pattern upon at least the coated surface of the pipe which defines an area of interest wherein the at least one temperature sensing layer is to be formed, wherein the area of interest comprises at least one patterned opening in the exposed photoresist layer, wherein the patterned opening has sidewalls that extend substantially perpendicular to the coated surface(s) of the pipe, and wherein the patterned opening further comprises a lowermost region closest to the coated surface(s) of the pipe.

The expressions "photoresist developing agent" or "developer", as used in the context of the present invention, refer to a compound or composition which is applied onto the photoresist layer, once the mask has been removed, to dissolve either the exposed or the unexposed photoresist areas, depending on whether a positive photoresist or a negative photoresist has been used, respectively. Examples of suitable developers that may be used in the process according to the first aspect of the invention include, but are not limited to, aqueous alkaline solutions such as an aqueous sodium hydroxide solution, an aqueous potassium hydroxide solution, an aqueous tetramethylammonium hydroxide (TMAH) solution and an aqueous sodium carbonate solution. When aqueous alkaline solutions having a pH higher than 13 are employed, it becomes particularly important to control that the contacting of the developer with the photoresist layer only lasts for as long as is necessary for the developer to dissolve those portions of the photoresist that are no longer needed.

Step (c) of the process according to the first aspect of the invention is aimed at functionalizing the area of interest defined in step (b) in order to form a functionalized defined area. The term "functionalization", when referred to a surface or area in the context of the present invention, means that said surface or area is modified in such a way that it then allows the binding of chemical functional groups, so that desired specific surface properties may be given to that surface or area.

The present invention solves the existing known problems encountered when performing such functionalization with state-of-the-art methods based on the use of strong inorganic acids, such as hydrofluoric acid, which usually require special equipment, advanced residue management strategies or even additional personnel safety training and measures in place, as a result of their extreme acidity and even corrosion properties. Specifically, the technical solution provided in the process according to the first aspect of the present invention involves carrying out the functionalization of the area of interest as defined in step (b) by forming a self-assembled monolayer (SAM) onto the coated surface(s) of the pipe via a silanization treatment. This strategy avoids the use of strong inorganic acids, thus further helping preserve the integrity of the electrically isolating layer, therefore ensuring the reliability of the measurements that may be made using the temperature sensing layer(s) positioned on the at least one surface of the pipe.

The expression "self-assembled monolayer" or "SAM" generally refers to a two-dimensional material spontaneously formed by the highly ordered assembly of its molecular constituents onto the surface of a solid, which typically forms a one-molecule-thick layer on the surface.

In some embodiments, step (c) of the process according to the first aspect of the invention comprises subjecting the area of interest defined in step (b) to a silanization treatment, wherein the silanization treatment comprises applying at least one silanization agent onto the area of interest defined in step (b) of the process. The at least one silanization agent may be applied onto the area of interest by an aqueous sol-gel process or by treating the area of interest with a silanization agent solution comprising the at least one silanization agent. Said treatment of the area of interest with a silanization agent solution may be carried out, for example, by immersing said area of interest into the silanization agent solution, or by pouring a predetermined amount of silanization agent solution onto the area of interest.

The at least one silanization agent is preferably a bifunctional organosilane having an alkoxy terminal group and an organofunctional terminal group, which are connected via a linker or spacer. Said organofunctional termini may be tailored to modulate the properties of the surface, once it forms the self-assembled monolayer, as one functional group may be anchored to the surface while the other remains free for further modification by it becoming bound to another molecule. In a particularly preferred embodiment, the at least one silanization agent is a polyorganosilane comprising at least one alkoxy terminal group and an organofunctional terminal group which is an epoxy group, an amino group, an acrylate group or a mercapto group, wherein both terminal groups are connected through a linker.

In some embodiments, the at least one silanization agent is a polyorganosilane comprising at least one hydroxyl terminal group and an organofunctional terminal group which is an epoxy group, an amino group, an acrylate group or a mercapto group, wherein both terminal groups are connected through a linker, and wherein the polyorganosilane is obtained or obtainable by a previous polymerization step of an organosilane, said organosilane preferably having at least one hydroxyl terminal group and an organofunctional terminal group which is an epoxy group, an amino group, an acrylate group or a mercapto group. Such polymerization step is typically carried out by placing an organosilane in a solvent which comprises at least one organic solvent, or a mixture of at least one organic solvent and water. In some embodiments, the polymerization step may be carried out by placing an organosilane in a solvent which comprises at least one alcohol (*e.g.,* ethanol, butanol, propanol), or a mixture of at least one alcohol (*e.g.,* ethanol, butanol, propanol) and water. Once an organosilane solution is prepared, hydrolysis of at least a portion of the alkoxy groups found in the organosilane occurs, therefore forming silanol groups (*i.e.*, Si-O-H groups) which then undergo a polymerization reaction and, as a result, a polyorganosilane is obtained and can later used to form the SAM onto the surface(s). Examples of suitable concentrations of polyorganosilanes as provided in the silanization agent solution are in the range from 1·10⁻³ M to 5·10⁻³ M.

Preferred organosilanes that may be employed for producing suitable silanization agents are selected from the group consisting of 3-aminopropyltrimethoxysilane (APTMS), 3-aminopropyltriethoxysilane (APTES), 4-aminophenyltrietoxysilane, 3-(2,4-dinitrophenylamino)propyltriethoxysilane), N-(3-triethoxysilylpropyl)-4,5-dihydroimidazole, (3-glycidyloxypropyl)trimethoxysilane (GPTMS), 3-mercaptopropyltrimethoxysilane (MPTMS) and 3-(trimethoxysilyl)propylmethacrylate (TMSPM). More preferably, the organosilane may be selected from the group consisting of 3-aminopropyltrimethoxysilane (APTMS), 3-aminopropyltriethoxysilane (APTES), 4-aminophenyltrietoxysilane, (3-glycidyloxypropyl)trimethoxysilane (GPTMS), 3-mercaptopropyltrimethoxysilane (MPTMS) and 3-(trimethoxysilyl)propylmethacrylate (TMSPM). Still more preferably, the organosilane may be selected from the group consisting of 3-aminopropyltrimethoxysilane (APTMS), 3-aminopropyltriethoxysilane (APTES), 4-aminophenyltrietoxysilane, and 3-mercaptopropyltrimethoxysilane (MPTMS).

In some embodiments, the at least one silanization agent may be applied onto the area of interest by treating said area of interest with a silanization agent solution comprising the at least one silanization agent. The silanization agent solution may preferably comprise at least one silanization agent and a solvent which comprises at least one organic solvent, or a mixture of at least one organic solvent and water. In some embodiments, the silanization agent solution may preferably comprise at least one silanization agent and at least one organic solvent which comprises at least one alcohol, or a mixture of at least one alcohol and water. In some embodiments, the silanization agent solution may preferably comprise at least one silanization agent and at least one organic solvent which consists of at least one alcohol. Examples of suitable alcohols which may be employed as solvents for the silanization agent solution, either alone or in combination with water, include, but are not limited to, ethanol, propanol and butanol. Examples of suitable alcohol-water mixtures for use as a solvent comprised by the silanization agent solution comprise a mixture consisting of more than 80 wt.% alcohol, such as ethanol, and the remaining amount, up to 100 wt.%, of water. Other suitable alcohol-water mixtures include, but are not limited to 85 wt.% ethanol and 15 wt.% water; 90 wt.% ethanol and 10 wt.% water; or 75 wt.% ethanol and 25 wt.% water. The use of an organic solvent which comprises a mixture of at least one alcohol and water in the silanization agent is particularly preferred due to the fact that it facilitates application of the silanization agent onto a wide range of different substrates, as well as onto small-sized particles. On the other hand, while the use of an organic solvent which comprises alcohol(s) but not water in the silanization agent solution (*i.e.*, a silanization agent solution comprising at least one silanization agent and at least one organic solvent which consists of at least one alcohol) may also be particularly preferred for carrying out deposition onto small-sized particles, it is typically involves higher complexity during scale-up to ensure reproducibility, *e.g.*, by requiring a number of additional process control steps. Furthermore, the use of an organic solvent which is fully based on alcohol(s) also typically requires a drying step (*e.g.*, 4 h at 150°C) of the substrate over which thin-layer deposition has been carried out.

In some embodiments, when the treatment of the area of interest in step (c) is carried out by immersing said area within the silanization agent solution comprising the at least one silanization agent, the immersion is preferably carried out during a reduced predetermined period. Said reduced predetermined period is typically established as the time sufficient for applying the silanization agent solution onto the area of interest, without damaging the removable pattern previously formed upon the at least one coated surface(s) of the pipe by the lithography process. Since the removable pattern is made of a photoresist material, which has been optically patterned in step (b) of the process, it becomes particularly important to avoid its damage, as it could later negatively impact on the accuracy of the electroless metal plating because of the distortion that such damage may have caused in the defined area of interest. It will become apparent that such reduced predetermined period will particularly depend on the chemical characteristics of the particular silanization agent solution employed, even though it can be easily determined by visual inspection or by optical microscopy. In a preferred embodiment, when the treatment of the area of interest in step (c) is carried out by immersing said area within the silanization agent solution comprising the at least one silanization agent, the immersion is preferably carried out during a predetermined period which is equal to or less than 2 minutes, equal to or less than 1 minute, equal to or less than 30 seconds. In some embodiments, when the treatment of the area of interest in step (c) is carried out by immersing said area within the silanization agent solution comprising the at least one silanization agent, the immersion is preferably carried out during a predetermined period in the range from 2 seconds to 2 minutes, preferably from 2 seconds to 1.5 minutes, and more preferably from 2 seconds from 1 minute. In some other embodiments, when the treatment of the area of interest in step (c) is carried out by immersing said area within the silanization agent solution which comprises at least one silanization agent and a solvent which comprises at least one organic solvent, or a mixture of at least one organic solvent and water, the immersion is preferably carried out during a predetermined period of time which is from 2 seconds to 2 minutes, from 2 seconds to 1.5 minutes, from 2 seconds to 1 minute, or from 2 seconds to 0.5 minutes.

The silanization treatment carried out in step (c) of the process according to the first aspect of the invention further comprises a subsequent step, wherein the area of interest is dried and/or cured, in order to ensure that a monolayer is formed during electroless plating deposition, instead of a bulk precipitate formation. This subsequent step is carried out once the silanization agent has been applied and the SAM has been formed. In particular, by means of the drying and/or curing of the area of interest it is then possible to further convert the hydrogen bonds initially formed between the silanol groups (i.e., Si-O-H groups) found in the SAM and the hydroxyl groups found in the surface(s) into covalent -Si-O-Si- bonds. It will become apparent that, depending on the characteristics of the silane provided in the SAM, it may be desirable to subject the area of interest to drying, curing or both.

In an embodiment, when the treatment of the area of interest in step (c) is carried out by immersing the area of interest within the silanization agent solution, and the solution comprises a solvent which comprises at least one alcohol, preferably ethanol, and optionally also water, the optional subsequent step may involve subjecting the area of interest to a predetermined temperature preferably in the range from 100 °C to 150 °C, more preferably in the range from 110 °C to 120 °C, during a predetermined period which is sufficient for evaporating the water content. Said predetermined time may preferably be in the range from 2 minutes to 15 minutes, and more preferably in the range from 5 minutes to 10 minutes.

In another embodiment, when the treatment of the defined area of interest in step (c) is carried out by immersing the defined area within the silanization agent solution comprising the at least one silanization agent, and the solution comprises a solvent which comprises at least one alcohol, preferably ethanol, and optionally also water, the optional subsequent step may involve subjecting the area of interest to UV curing.

In some embodiments, when the treatment of the defined area of interest in step (c) is carried out by immersing the defined area within the silanization agent solution comprising the at least one silanization agent, and the solution comprises a solvent which comprises at least one alcohol, preferably ethanol, and also water, the subsequent step may involve allowing the area of interest to dry at room temperature (i.e., 20 °C) with a relative humidity below 60%.

In step (d) of the process according to the first aspect of the invention, a solution comprising a catalyst metal source and a protecting agent is deposited onto the functionalized defined area of interest resulting from step (c), optionally in the presence of a stabilizer, so that the functionalized defined area of interest may become a catalytically active defined area of interest by first creating a layer of catalyst upon which a at least one temperature sensing layer may be subsequently formed by electroless metal plating.

In some embodiments, the catalyst metal source may be a palladium source, a platinum source, a silver source or a gold source. By way of illustration, palladium may be deposited as colloidal palladium, ionic palladium, etc. A suitable example of catalyst palladium source includes palladium chloride.

The "protecting agent", also known as "sensitizing agent", is defined as an agent which facilitates the formation of a catalytic nuclei for conducting electroless plating thereon, when used together with a catalyst metal source, by improving metal deposition. The protecting agent preferably comprises a Sn(II) source, such as stannous chloride (SnCl₂).

Examples of stabilizers which may also be used together with the solution comprising the catalyst metal source and the protecting agent include, but are not limited to, solvents, acids and/or bases. In a preferred embodiment, hydrochloric acid (*e.g.*, hydrochloric acid aqueous solution) may be used, in particular when stannous chloride is used as protecting agent.

By way of illustration, a catalytically active defined area of interest may be obtained by first depositing a solution comprising PdCl₂ as catalyst metal source and SnCl₂ as protecting agent, in the presence of hydrochloric acid, since they may produce Pd(0) particles on the surface(s).

The solution which is employed for carrying out step (d) of the process according to the first aspect of the invention typically comprises an aqueous medium, an alcohol medium, or a mixture thereof. In an alternative embodiment, two solutions, wherein one comprises the catalyst metal source while the other comprises the protecting agent, may also be employed and sequentially deposited onto the functionalized defined area of interest resulting from step (c).

The solution which is employed for carrying out step (d) of the process according to the first aspect of the invention may comprise a concentration of the catalyst metal source in the range from 0.001% to 1.000% by weight, preferably from 0.001% to 0.500% by weight. In some embodiments, the solution which is employed for carrying out step (d) may have a pH in the range from 3 to 14.

According to step (e) of the process according to the first aspect of the invention, at least one temperature sensing layer is formed over the catalytically defined area of interest resulting from step (d) by electroless metal plating. In a preferred embodiment, the electroless metal plating is electroless copper plating, electroless nickel plating, electroless gold plating or electroless palladium plating. In still another preferred embodiment, in step (e), at least one temperature sensing layer is formed over the catalytically defined area of interest resulting from step (d) by electroless copper plating or electroless nickel plating.

In some embodiments, in step (e) of the process according to the invention, the electroless metal plating comprises the step of immersing at least the catalytically active defined area resulting from step (d) in an electroless metal plating bath, wherein the electroless metal plating bath comprises a metal source, a reducing agent, and optionally at least one further agent selected from the group consisting of a complexing agent, a pH adjusting agent, a surfactant, an additive or any combination thereof. In the presence of the reducing agent, metal ions undergo reduction and are deposited onto the catalytically active defined area of interest. It is postulated that the use of a complexing agent as further agent, for example, may help accelerate metal deposition by decreasing the reduction potential difference with the reducing agent. One or more of the further agents may be selected depending on the metal which is to be deposited onto the surface(a), or the intended properties of the at least one temperature sensing layer or RTD sensors derived therefrom which are to be fabricated.

In an embodiment, in step (e) of the process according to the invention, the electroless metal plating is electroless copper plating, which comprises the step of immersing at least the catalytically active defined area resulting from step (d) in an electroless copper plating bath, wherein the electroless copper plating bath comprises a Cu(II) source, a complexing agent and a reducing agent, wherein the electroless copper plating bath may preferably have a pH in the range from 6 to 14, more preferably a pH from 8 to 14, and still more preferably a pH from 10 to 14. Particularly suitable complexing agents for electroless copper plating in the context of the present invention include, but are not limited to, EDTA, cyanide salts, tartrate salts, 2,2'-pyridyl, 1,10-phenanthrolines, sodium citrate, succinic acid and malic acid. Reducing agents which are particularly suitable for electroless copper plating may include, without limitation, formaldehyde, glyoxylic acid, hypophosphites, sodium or potassium borohydride, hydrazines and borane-dimethylamine complex. Examples of suitable Cu(II) sources include, but are not limited to, copper sulfate, copper chloride or copper bromide. Electroless copper plating, when carried out in step (e) of the process according to the first aspect of the invention, may be preferably carried out at a temperature in the range from 40°C to 50°C.

In an embodiment, in step (e) of the process according to the invention, the electroless metal plating is electroless nickel plating which comprises the step of immersing at least the catalytically active defined area resulting from step (d) in an electroless nickel plating bath, wherein the electroless nickel plating bath comprises a Ni(II) source and a reducing agent, wherein the electroless nickel plating bath may preferably have a pH in the range from 8 to 12. Examples of suitable Ni(II) sources include, but are not limited to, nickel sulfate, nickel nitrate, nickel chloride or nickel bromide. Reducing agents particularly suitable for electroless nickel plating may include, without limitation, hydrazinium hydroxide, sodium hypophosphite, sodium or potassium borohydride and a borane-dimethylamine complex. In an embodiment, wherein pure nickel deposition is of particular interest, the use of reducing agents which do not contain either borane or phosphorus, such as hydrazinium hydroxide, may be favoured, since they may lead to the deposition of pure nickel without any borane- or phosphorus-containing impurity. Electroless nickel plating, when carried out in step (e) of the process according to the first aspect of the invention, may be preferably carried out at a temperature in the range from 70°C to 80°C.

The process according to the first aspect of the invention may further comprise, after completing step (d):
(i) carrying out a thermal treatment at a temperature higher than 200 °C, optionally under vacuum conditions, in order to help stabilize the recently deposited metal and avoid future changes taking place therein once the at least one temperature sensing layer is actively used for determining temperature through measuring its electrical resistance variations; and/or
(ii) removing any remaining portion of the removable pattern from the coated surface of the pipe, after forming the at least one temperature sensing layer over the catalytically active defined area of interest resulting from step (d).

It will become apparent that the thermal treatment of step (i) may be carried out under different conditions, which may be easily determined depending on known parameters such as the type of metal which has been deposited or the thickness of the deposited layer, among others. In an embodiment, the thermal treatment carried out in step (i) as indicated above may take place at a temperature in the range from 200 °C to 500 °C, or at a temperature in the range from 200 °C to 450 °C.

By the term "stabilization", as used in the context of optional step (i) of the process according to the first aspect of the invention, it is meant that reordering of the metallic structure newly formed is achieved by performing the thermal treatment of step (i), in such a way that residual tension stress is significantly reduced after electroplating. Furthermore, by the expression "avoid future changes taking place once the at least one temperature sensing layer is actively used", it is meant that, through application of the thermal treatment in step (i), it is possible to avoid the occurrence of a subsequent further reordering of the metallic structure once the temperature sensing layer is being used, which could have otherwise impaired physical properties (e.g., electric properties) and negatively affected the accuracy of the measurements.

Removal step (ii) is typically known as etching, and may be carried out by using, for example, at least one alkaline agent, such as a sodium or potassium hydroxide aqueous solution.

The process according to the first aspect of the invention may further comprise, after completing step (d), and also after optional steps (i) and/or (ii) have been carried out if applicable, a further step wherein a protective coating is applied onto at least a portion of the at least one temperature sensing layer. The protective coating may preferably comprise SiO₂, Al₂O₃, AlN, Si₃N₄, Zr₂O₃ or any mixture thereof. In some embodiments, when a plurality of temperature sensing layers is provided onto at least one surface of the pipe, the same protective layer may be at least applied onto that plurality of temperature sensing layers or, alternatively, a protective layer may be added onto at least a portion of each one of the temperature sensing layers. Said protective coating may be applied by methods known in the art such as physical vapor deposition (PVD), in particular physical vapor deposition by reactive magnetron sputtering (PVD-RMS), chemical vapor deposition (CVD), or sol-gel deposition.

In an embodiment, the process of the first aspect of the invention may be a continuous process wherein the pipe onto which the at least one temperature sensing layer is to be fabricated is passed through a plurality of interconnected zones, wherein the plurality of interconnected zones comprises:
- a first zone wherein the lithography process of step (b) is carried out to form at least one removable pattern upon a pipe coated with at least one electrically isolating layer, wherein the at least one removable pattern defines the area of interest wherein the temperature sensing layer is to be formed upon the coated surface of the pipe;
- a second zone wherein the functionalization step (c) is carried out by the silanization treatment which comprises applying the at least one silanization agent onto the area of interest defined in step (b) of the process, wherein the at least one silanization agent is provided in a silanization solution bath, wherein the silanization solution bath is applied to the area of interest, or the area of interest is immersed therein; and
   wherein the silanization treatment further comprises a subsequent step of drying and/or curing the area of interest;
- a third zone wherein the catalytic activation step (d) is carried out by depositing the solution comprising the catalyst metal source and the protecting agent onto the functionalized defined area of interest resulting from step (c);
- a fourth zone wherein the electroless metal plating step (e) is carried out;
- optionally a fifth zone comprising a liquid etch-off bath adapted to effect removal of any remaining portion of the removable pattern from the coated surface of the pipe after forming the at least one temperature sensing layer over the catalytically active defined area resulting from step (d), said liquid etch-off bath comprising at least one solvent for removing the pattern and optionally further comprising at least one alkaline agent; and
- optionally a sixth zone, wherein a protective coating is formed onto at least a portion of the at least one temperature sensing layer, preferably wherein the protective coating is deposited by physical vapor deposition (PVD), in particular physical vapor deposition by reactive magnetron sputtering (PVD-RMS), chemical vapor deposition (CVD), or sol-gel deposition.

In some embodiments, an outer diameter of the pipe is equal to or less than 4 meters. In some other embodiments, the outer diameter is equal to or less than 2.5 m. The outer diameter of the pipe may be equal to or less than 20 mm.

The process according to the first aspect of the invention may further comprise the provision of at least one output and at least one input electric terminal, preferably positioned on two opposite ends of the at least one temperature sensing layer, in such a way that the at least one temperature sensing layer may be employed as resistance-temperature detector (RTD). An RTD sensor may be provided on a pipe by adding at least one sensor layer onto at least one surface of the pipe. Furthermore, a plurality of RTD sensors may be provided on the pipe by adding a plurality of temperature sensing layers onto at least one surface of the pipe.

In some embodiments, the process according to the first aspect of the invention may further comprise, after completing step (d), and also after optional steps (i) and/or (ii) have been carried out if applicable, a further step:
- wherein at least one output and at least one input electric terminal are provided, said electric terminals being preferably positioned on two opposite ends of the at least one temperature sensing layer, in such a way that the electrical resistance of the at least one temperature sensing layer may be measured, thus allowing the determination of the temperature of the fluid flowing within the pipe as an RTD sensor; and
- optionally wherein a protective coating is applied onto at least a portion of the at least one temperature sensing layer, before or after providing the output and input terminals.

By the process according to the first aspect of the invention, an RTD sensor is advantageously provided onto at least one surface of a pipe, so the temperature of the pipe can be easily determined by measuring the electrical resistance of the temperature sensing layer. Based on those measurements, it is possible to determine the temperature of a fluid material within the pipe, as the temperature thereof will change according to the temperature of the pipe, thereby changing the temperature of the sensing layer and thus also the electrical resistance of the at least one temperature sensing layer, which can then be measured. To this end, the at least one temperature sensing layer may comprise a pattern such as those RTD patterns known in the art.

In a second aspect of the invention, it is provided a pipe which is made of an electrically conductive material, wherein the pipe comprises at least one RTD sensor onto at least one of its surfaces, and wherein the pipe is obtained or obtainable by the process according to the first aspect of the invention.

### DESCRIPTION OF WAYS OF CARRYING OUT THE INVENTION

The following examples of ways for carrying out the invention are provided by way of illustration and shall not be construed as limiting the invention. Numerous variations are possible, and it is to be understood that within the scope of the appended claims, the invention may be practiced otherwise than as specifically described in the following examples.

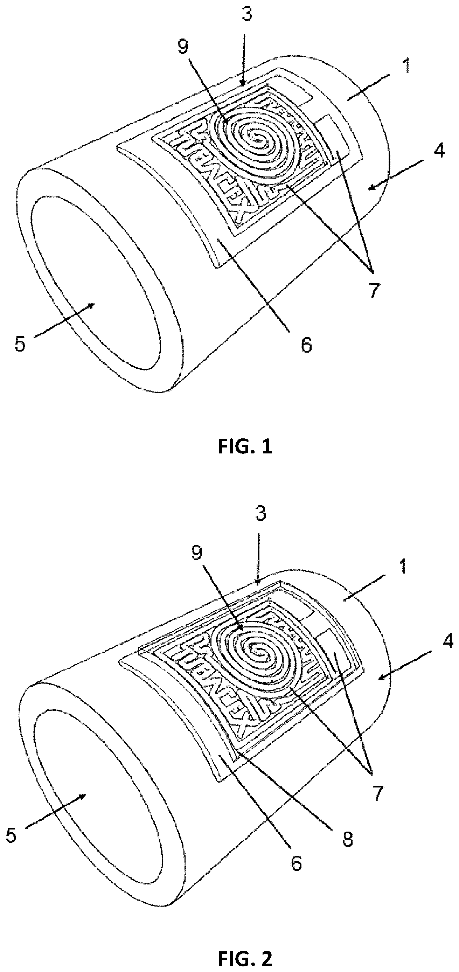

**Figures 1-3** show different views of a pipe 1 in accordance with an embodiment.

The pipe 1 according to the invention, which has an outer diameter 2 and is made of an electrically conductive material, has at least one RTD sensor 3 onto an outer surface 4 thereof. Even though in this example the at least one RTD sensor **3** is provided onto the outer surface **4,** in other examples the at least one RTD sensor **3** may be provided onto the inner surface **5** of the pipe **1,** or in still other examples, a plurality of RTD sensors may be provided onto the outer surface **4** and/or the inner surface **5.**

The RTD sensor **3** comprises at least one electrically isolating layer **6** which is provided onto at least a portion of the outer surface **4** (*i.e.,* at least a portion of the outer surface **4** of the pipe **1** is coated with the at least one electrically isolating layer **6**), at least one temperature sensing layer **7** onto the at least one electrically isolating layer **6,** and a protective coating **8** onto at least a portion of the at least one temperature sensing layer **7** (in this example, the terminals of the at least one temperature sensing layer **7** are covered by the protective coating **8**).

Such at least one electrically isolating layer **6** may comprise or consist of one or more (*i.e.,* a combination) of the following electrically isolating materials: Al₂O₃, ZrO₂, Y₂O₃, MgO, Ti₂O₃, AlN, SiO₂, Si₃N₄, borosilicate glass, mica and tetrafluoroethylene polymers (e.g., Teflon^{®}). The coating with the electrically isolating layer **6** may be carried out by known methods such as sol-gel deposition, physical vapor deposition (PVD), chemical vapor deposition (CVD) or thermal spraying. Furthermore, such protective coating **8** may comprise SiO₂, Al₂O₃, AIN, Si₃N₄, Zr₂O₃ or any mixture thereof.

**Fig. 1** shows a view of a pipe **1** in accordance with an embodiment not containing protective coating **8,** while **Fig. 2** shows another view of a pipe **1** in accordance with an embodiment wherein a protective coating **8** has been provided onto at least a portion of the at least one temperature sensing layer **7** (in this example, the terminals of the at least one temperature sensing layer **7** are covered by the protective coating **8**) wherein the RTD pattern **9** of the temperature sensing layer **7** is.

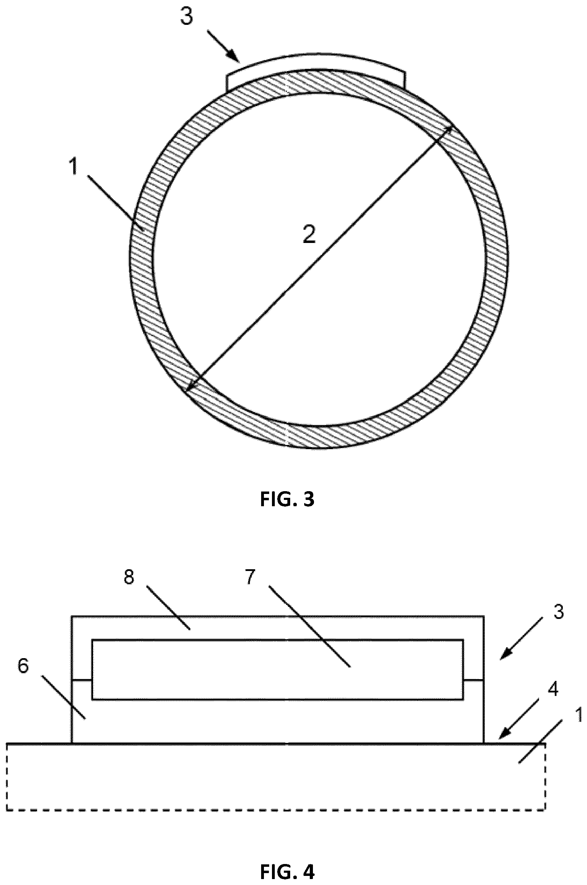

**Figure 4** shows a section of the RTD sensor **3** of the pipe **1.**

As better shown in **Fig. 4****,** the RTD sensor **3** has the electrically isolating layer **6** between the temperature sensing layer **7** and the outer surface **4** of the pipe **1,** so that the currents in the temperature sensing layer **7** are not transferred to the outer surface **4** of the pipe **1,** which is made of an electrically conductive material. The RTD sensor **3** has the protective coating **8** on top of at least a portion of the at least one temperature sensing layer **7.**

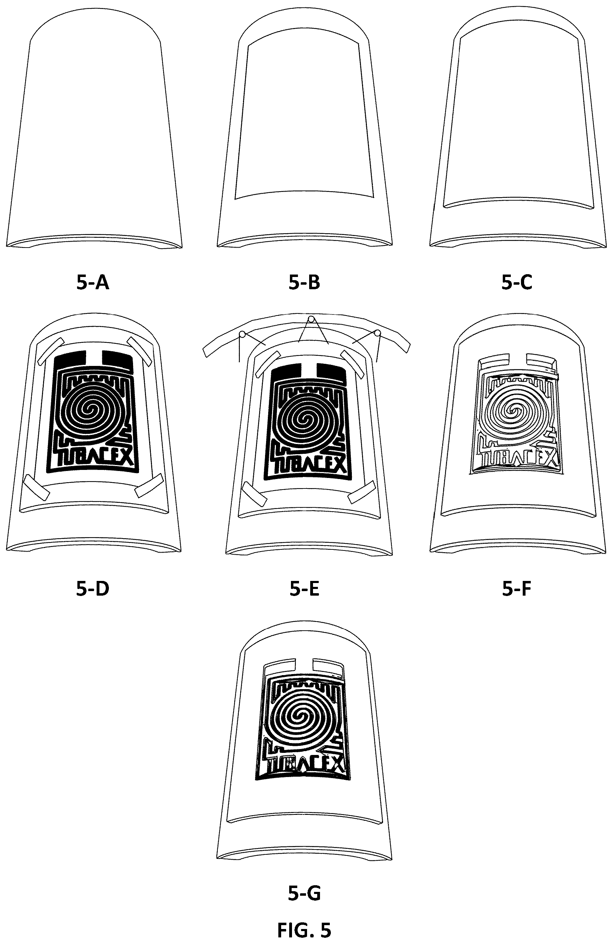

**Figure 5** shows the process according to the invention for providing at least one RTD sensor 3 (*e.g.,* an RTD sensor such as the one shown in **Fig. 1-4**) onto the outer surface 4 a pipe **1,** wherein the pipe **1** is made of an electrically conductive material.

In **Fig. 5-A**, it is provided a pipe **1** wherein at least a portion of the outer surface **4** of the pipe **1** onto which at least one temperature sensing layer **7** is to be formed is coated with at least one electrically isolating layer **6** to form at least one coated surface (for instance, in **Fig. 5-A** the outer surface of the pipe **1** is completely coated with the electrically isolating layer **6**), as defined in step (a) of the process according to the invention.

A surface treatment can be optionally carried out before step (b) of the process according to the invention, in order to prepare said outer surface **4** of the pipe **1** for providing at least one temperature sensing layer **7** thereon which can reliably remain attached, (**Fig. 5-B**). Said surface treatment is aimed at cleaning the surface and/or increase its roughness, and also helps increasing the reactivity of the outer surface **4** over which the at least one temperature sensing layer **7** is to be fabricated, by exposing the hydroxyl groups which are available on the surface). The surface treatment may comprise subjecting at least the coated surface of the pipe **1** resulting from step (a) to either a chemical treatment with an acid having a pKa value which is equal to or less than 4, or to a mechanical treatment based on shot blasting, grit blasting, shot peening, tumbling or any combination thereof and, more preferably, on shot blasting, with a metal abrasive material which comprises or consists of aluminum oxide pellets, such as white corundum pellets. Prior to said surface treatment step, a cleaning step may be carried out with paper and a solvent, and/or with ultrasonic cleaning.

**Fig. 5-C** to **5-F** show the steps for forming a removable pattern **9** upon an area of interest on the coated outer surface of the pipe **4,** wherein the at least one temperature sensing layer **7** is to be formed, according to step (b) of the process according to the invention. A photoresist layer **10** is formed or positioned upon a portion of the coated outer surface of the pipe **1** (**Fig. 5-C**), said photoresist layer **10** comprising an uppermost surface furthest from the coated substrate of the pipe and a lowermost surface in contact with the coated substrate of the pipe (said uppermost and lowermost surfaces are not specifically shown in **Fig. 5-C**). Then, as shown in **Figure 5-D****,** a mask **11 is** positioned upon the uppermost surface of the photoresist layer **10,** wherein the mask comprises at least one portion which is opaque to UV light, and at least one portion which is transparent to UV light. Said photoresist layer **10** is then optically patterned by subjecting it to an exposure step, wherein the photoresist layer **10** is exposed to UV light through the mask 11, as shown in **Figure 5-E****,** so as to provide an exposed photoresist layer **12.** The mask **11** is then removed or detached, and the exposed photoresist layer **12** is then developed by applying a photoresist agent (also known as developer) so as to provide the removable pattern **13** (**Fig. 5-F**)**.**

As can be seen in **Fig. 5-D** and **Fig. 5-E****,** the mask **11** is flexible enough to attach on the outer surface **4** of the pipe **1** despite the curvature of the pipe **1.**

The removable pattern **13** defines an area of interest wherein the at least one temperature sensing layer **7** is to be formed, wherein the area of interest comprises at least one patterned opening **14** in the removable pattern **13,** wherein the at least one patterned opening **14** has sidewalls (not specifically shown in **Fig. 5-F**) that extend substantially perpendicular to the coated surface of the pipe **1,** and wherein the patterned opening **14** further comprises a lowermost region (not specifically shown in **Fig. 5-F**) closest to the coated surface of the pipe **1**.

Even though this example is provided with one mask **11** for forming the at least one temperature sensing layer **7**, in other examples more than two masks may be necessary or of interest to form said at least one temperature sensing layer **7** or even a plurality thereof. The provision of further masks may also depend upon the curvature of the outer surface **4** of the pipe **1**, the pattern of the sensing layer **7,** and/or the flexibility of the chosen mask.

In this example, the area of interest is functionalized by forming a self-assembled monolayer (not shown in **Fig. 5**) onto the coated surface of the pipe **1** via a silanization treatment (*i.e*., step (c) of the process according to the invention). Said silanization treatment avoids the use of strong inorganic acids, thus helping to preserve the integrity of the electrically isolating layer **6,** therefore ensuring the reliability of the RTD sensor measurements. In this example, the silanization agent is preferably a bifunctional organosilane having an alkoxy terminal group and an organofunctional group, which are connected via a linker or spacer, preferably, the silanization agent is 3-aminopropyltrimethoxysilane (APTMS), 3-aminopropyltriethoxysilane (APTES), 4-aminophenyltrietoxysilane, 3-(2,4-dinitrophenylamino)propyltriethoxysilane), N-(3-triethoxysilylpropyl)-4,5-dihydroimidazole, (3-glycidyloxypropyl)trimethoxysilane (GPTMS), 3-mercaptopropyltrimethoxysilane (MPTMS) and 3-(trimethoxysilyl)propylmethacrylate (TMSPM) and, more preferably, the silanization agent is 3-aminopropyltrimethoxysilane (APTMS). Said treatment is carried out by immersing the area of interest into a silanization agent solution comprising the silanization agent and a solvent, even though it may also be carried out by pouring a predetermined amount of silanization agent solution onto the area of interest. The solvent preferably comprises a mixture of at least one alcohol and water. Even though in this example a solvent comprising said mixture of at least one alcohol and water is shown, alternatively, a solvent comprising at least one alcohol, without comprising water, may also be employed. Step (d) according to the process of the invention is performed in this example by depositing a solution comprising a catalyst metal source, such as palladium chloride, and a protecting agent such as stannous chloride (SnCl₂) onto the functionalized area of interest resulting from step (c) in the presence of a stabilizer, such as hydrochloric acid. Electroless plating (step (e) according to the process of the invention) is then carried out, so that at least one temperature sensing layer **7** is formed over the catalytically defined area of interest resulting from step (d) (**Fig. 5-G**). An additional etching step may be carried out (not shown in **Fig. 5****),** wherein any remaining portion of the removable pattern **13** is removed from the coated surface of the pipe 1, once the at least one temperature sensing layer **7** has been formed over the catalytically active defined area of interest resulting from step (d). Said etching step is carried out in the present example with a sodium hydroxide aqueous solution.

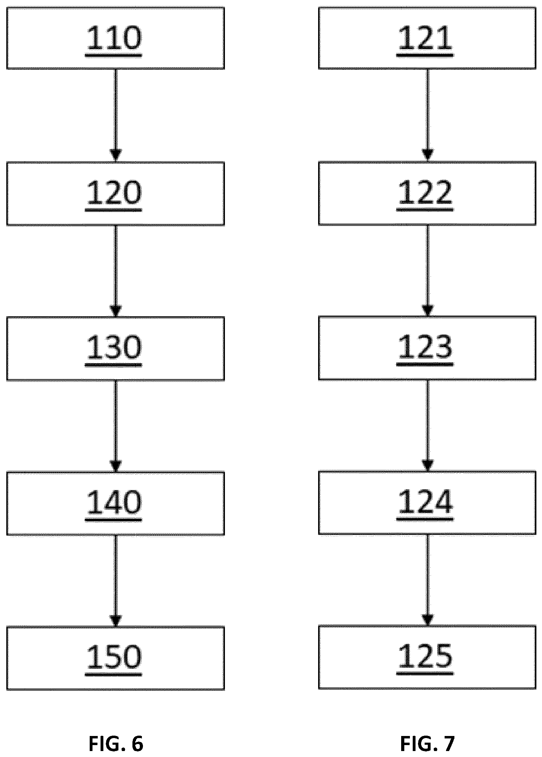

**Figure 6** shows, in block diagram form, a process **100** in accordance with embodiments of the invention for providing at least one RTD sensor onto at least one surface of a pipe, wherein the pipe is made of an electrically conductive material. The process **100** includes a step **110** of providing a pipe, wherein at least a portion of at least one surface of the pipe onto which at least one temperature sensing layer is to be manufactured is or has been coated with at least one electrically isolating layer to form at least one coated surface. The method further includes a step **120** of forming a removable pattern upon the at least one coated surface of the pipe by a lithography process, wherein the removable pattern defines an area of interest wherein at least one temperature sensing layer is to be formed upon the at least one coated surface of the pipe.

The process **100** further includes a step **130** of functionalizing said area of interest with a functionalization step which comprises subjecting the area of interest to a silanization treatment, wherein the silanization treatment comprises applying at least one silanization agent onto the area of interest, and wherein the silanization treatment further comprises a subsequent step of drying and/or curing the area of interest.

The process **100** further comprises a step **140** of depositing a solution comprising a catalyst metal source and a protecting agent onto the functionalized defined area of interest resulting from the functionalization step to produce a catalytically active defined area of interest. The process **100** further includes a step **150** of forming at least one temperature sensing layer over the catalytically active defined area of interest by electroless metal plating.

**Figure 7** shows, in block diagram form, an exemplary method **120,** according to the invention, of forming a removable pattern upon the at least one coated surface of the pipe by a lithography process such as photolithography, wherein the removable pattern defines an area of interest wherein at least one temperature sensing layer is to be formed upon the at least one coated surface of the pipe.

The method **120** includes a step **121** of forming or positioning a photoresist layer (for example, the photoresist layer of **FIG. 5-C**) upon a portion of the coated outer surface of the pipe (such as pipe **1**), said photoresist layer comprising an uppermost surface furthest from the coated substrate of the pipe and a lowermost surface in contact with the coated substrate of the pipe. The method **120** includes a step **122** of positioning a mask (such as mask **11** of **Fig. 1**) upon the uppermost surface of the photoresist layer, wherein the mask comprises at least one portion which is opaque to UV light, and at least one portion which is transparent to UV light.

The method **120** includes a step **123** of optically patterning the photoresist layer by subjecting it to an exposure step, wherein the photoresist layer is exposed to UV light through the mask.

The method **120** includes a step **124** of removing the mask, and a step **125** of developing the exposed photoresist layer by applying a photoresist developing agent so as to provide at least one removable pattern upon the coated surface of the pipe, wherein the at least one removable pattern defines an area of interest wherein the sensing layer is to be formed, wherein the area of interest comprises at least one patterned opening in the exposed photoresist layer, wherein the patterned opening has sidewalls that extend substantially perpendicular to the coated surface of the pipe, and wherein the patterned opening further comprises a lowermost region closest to the coated surface of the pipe.

Throughout the description and the claims, the word "comprise" and variations thereof are not intended to exclude other technical features, ingredients or steps. Additional advantages and features of the invention will become apparent to those skilled in the art upon examination of the description or may be learned by practice of the invention without undue burden.

## Claims

1. A process (100) for providing at least one resistance temperature detection sensor (3) onto at least one surface (4, 5) of a pipe (1), wherein the pipe (1) is made of an electrically conductive material, and wherein the process (100) comprises the steps of:
(a) Providing (110) the pipe (1), wherein at least a portion of the at least one surface (4, 5) of the pipe (1) onto which at least one temperature sensing layer (7) is to be manufactured is or has been coated with at least one electrically isolating layer (6) to form at least one coated surface;
(b) Forming (120) a removable pattern upon the at least one coated surface of the pipe (1) by a lithography process, wherein the removable pattern defines an area of interest wherein at least one temperature sensing layer (7) is to be formed upon the at least one coated surface of the pipe (1);
(c) Functionalizing (130) the area of interest defined in step (b), wherein the functionalization step comprises:
subjecting the area of interest defined in step (b) to a silanization treatment, wherein the silanization treatment comprises applying at least one silanization agent onto the area of interest; and
wherein the silanization treatment further comprises a subsequent step of drying and/or curing the area of interest;
(d) Depositing (140) a solution comprising a catalyst metal source and a protecting agent onto the functionalized defined area of interest resulting from step (c) to obtain a catalytically active defined area of interest; and
(e) forming (150) at least one temperature sensing layer (7) over the catalytically active defined area of interest resulting from step (d) by electroless metal plating.

2. The process according to claim 1, wherein the electrically isolating layer is a dielectric material; preferably a dielectric material which is a dielectric ceramic material; more preferably a dielectric material which is a dielectric ceramic material selected from the group consisting of Al₂O₃, ZrO₂, Y₂O₃, MgO, Ti₂O₃, SiO₂, borosilicate glass and any mixture thereof.

3. The process according to claim 1 or 2, further comprising, before step (b), a surface treatment step which comprises:
subjecting at least the coated surface of the pipe (1) resulting from step (a) to shot blasting, grit blasting, shot peening, tumbling or any combination thereof; preferably, subjecting the coated surface of the pipe (1) resulting from step (a) to shot blasting; more preferably, subjecting the coated surface of the pipe (1) resulting from step (a) to shot blasting with a metal abrasive material selected from the group consisting of steel grit, copper shots and aluminum oxide pellets; or
treating at least the coated surface of the pipe (1) resulting from step (a) with an acid having a pKa value which is equal to or less than 4 or with a strong base.

4. The process according to any one of claims 1-3, wherein the lithography process in step (b) is a photolithography process which comprises the following steps:
forming (121) or positioning (121) a photoresist layer upon a portion of the coated surface(s) of the pipe (1), said photoresist layer comprising an uppermost surface furthest from the coated substrate(s) of the pipe (1) and a lowermost surface in contact with the coated substrate(s) of the pipe (1);
positioning (122) a mask upon the uppermost surface of the photoresist layer, wherein the mask comprises at least one portion which is opaque to UV light, and at least one portion which is transparent to UV light;
optically patterning (123) the photoresist layer by subjecting it to an exposure step, wherein the photoresist layer is exposed to UV light through the mask;
removing (124) the mask; and
developing (125) the exposed photoresist layer by applying a photoresist developing agent so as to provide at least one removable pattern upon the coated surface(s) of the pipe (1), wherein the at least one removable pattern defines an area of interest wherein the sensing layer is to be formed, wherein the area of interest comprises at least one patterned opening in the exposed photoresist layer, wherein the patterned opening has sidewalls that extend substantially perpendicular to the coated surface of the pipe (1), and wherein the patterned opening further comprises a lowermost region closest to the coated surface(s) of the pipe (1).

5. The process according to any one of claims 1-4, wherein the at least one silanization agent is applied onto the area of interest by aqueous sol-gel process or by treating the area of interest with a silanization agent solution comprising the at least one silanization agent; preferably by treating the area of interest with a silanization agent solution comprising the at least one silanization agent and a solvent which comprises at least one organic solvent, or a mixture of at least one organic solvent and water; preferably by treating the area of interest with a silanization agent solution comprising the at least one silanization agent and a solvent which comprises at least one alcohol, or a mixture of at least one alcohol and water.

6. The process according to any one of claims 1-5, wherein the silanization agent is a polyorganosilane comprising at least one alkoxy terminal group and an organofunctional terminal group which is an epoxy group, an amino group, an acrylate group or a mercapto group, wherein both terminal groups are connected through a linker.

7. The process according to claim 6, wherein the polyorganosilane is obtained or obtainable by a previous polymerization step of an organosilane; preferably by a previous polymerization step of an organosilane having at least one hydroxyl terminal group and an organofunctional terminal group which is an epoxy group, an amino group, an acrylate group or a mercapto group; more preferably by a previous polymerization step of an organosilane which is selected from the group consisting of 3-aminopropyltrimethoxysilane (APTMS), 3-aminopropyltriethoxysilane (APTES), 4-aminophenyltrietoxysilane, 3-(2,4-dinitrophenylamino)propyltriethoxysilane), N-(3-triethoxysilylpropyl)-4,5-dihydroimidazole, (3-glycidyloxypropyl)trimethoxysilane (GPTMS), 3-mercaptopropyltrimethoxysilane (MPTMS) and 3-(trimethoxysilyl)propylmethacrylate (TMSPM).

8. The process according to any one of claims 1-7, wherein, in step (d), the catalyst metal source is a palladium source, a platinum source, a silver source or a gold source; and/or the protecting agent comprises a Sn(II) source, preferably stannous chloride.

9. The process according to any one of claims 1-8, wherein, in step (e), the electroless metal plating is electroless copper plating, electroless nickel plating, electroless gold plating or electroless palladium plating.

10. The process according to any one of claims 1-9, wherein, in step (e),
the electroless metal plating is electroless copper plating, which comprises the step of immersing at least the catalytically active defined area resulting from step (d) in an electroless copper plating bath, wherein the electroless copper plating bath comprises a Cu(II) source, a complexing agent and a reducing agent; preferably wherein the electroless copper plating bath has a pH in the range from 6 to 14; or
the electroless metal plating is electroless nickel plating which comprises the step of immersing at least the catalytically active defined area resulting from step (d) in an electroless nickel plating bath, wherein the electroless nickel plating bath comprises a Ni(II) source and a reducing agent; preferably wherein the electroless nickel plating bath has a pH in the range from 8 to 12.

11. The process according to any one of claims 1-10, wherein the process further comprises removing any remaining portion of the removable pattern from the coated surface of the pipe (1), after forming the at least one temperature sensing layer (7) over the catalytically active defined area of interest resulting from step (d).

12. The process according to any one of claims 1-11, wherein the process further comprises a step of applying a protective coating (8) onto at least a portion of the at least one temperature sensing layer (7); preferably a protective coating (8) comprising SiO₂, Al₂O₃, AIN, Si₃N₄, Zr₂O₃ or any mixture thereof.

13. The process according to any one of claims 1-12, wherein the process further comprises providing at least one output and at least one input electric terminal, wherein the at least one output and at least one input terminals are preferably positioned on two opposite ends of the at least one temperature sensing layer (7).

14. The process according to any one of claims 1-13, wherein the process is a continuous process wherein the pipe (1) onto which the at least one temperature sensing layer (7) is to be fabricated is passed through a plurality of interconnected zones, wherein the plurality of interconnected zones comprises:
A first zone wherein the lithography process of step (b) (120) is carried out to form at least one removable pattern upon a pipe (1) coated with at least one electrically isolating layer, wherein the at least one removable pattern defines the area of interest wherein the temperature sensing layer (7) is to be formed upon the coated surface of the pipe (1);
a second zone wherein the functionalization step (c) (130) is carried out by the silanization treatment which comprises applying the at least one silanization agent onto the area of interest defined in step (b) of the process, wherein the at least one silanization agent is provided in a silanization solution bath, wherein the silanization solution bath is applied to the area of interest or the area of interest is immersed therein; and wherein the silanization treatment further comprises a subsequent step of drying and/or curing the area of interest;
a third zone wherein the catalytic activation step (d) (140) is carried out by depositing the solution comprising the catalyst metal source and the protecting agent onto the functionalized defined area of interest resulting from step (c);
a fourth zone wherein the electroless metal plating step (e) (150) is carried out;
optionally a fifth zone comprising a liquid etch-off bath adapted to effect removal of any remaining portion of the removable pattern from the coated surface of the pipe (1) after forming the at least one temperature sensing layer (7) over the catalytically active defined area resulting from step (d), said liquid etch-off bath comprising at least one solvent for removing the pattern and optionally further comprising at least one alkaline agent; and
optionally a sixth zone, wherein a protective coating (8) is formed onto the at least one temperature sensing layer (7), preferably wherein the protective coating (8) is deposited by physical vapor deposition (PVD), in particular physical vapor deposition by reactive magnetron sputtering (PVD-RMS), chemical vapor deposition (CVD), or sol-gel deposition.

15. A pipe (1) made of an electrically conductive material, wherein the pipe (1) comprises at least one resistance temperature detection sensor (3) onto at least one of its surfaces (4, 5), and the pipe (1) is obtained by the process according to any one of claims 1-14; preferably wherein the electrically conductive material is a conductive metallic material or a conductive alloy material.

## Patentansprüche

1. Verfahren (100) zum Bereitstellen mindestens eines Widerstandstemperatursensors (3) auf mindestens einer Oberfläche (4, 5) eines Rohrs (1), wobei das Rohr (1) aus einem elektrisch leitfähigen Material besteht und wobei das Verfahren (100) die folgenden Schritte umfasst:
(a) Bereitstellen (110) des Rohrs (1), wobei mindestens ein Teil der mindestens einen Oberfläche (4, 5) des Rohrs (1), auf der mindestens eine Temperaturmessschicht (7) hergestellt werden soll, mit mindestens einer elektrisch isolierenden Schicht (6) beschichtet ist oder wurde, um mindestens eine beschichtete Oberfläche zu bilden;
(b) Erzeugen (120) eines entfernbaren Musters auf der mindestens einen beschichteten Oberfläche des Rohrs (1) durch einen lithographischen Prozess, wobei das entfernbare Muster einen interessierenden Bereich definiert, in dem mindestens eine Temperaturmessschicht (7) auf der mindestens einen beschichteten Oberfläche des Rohrs (1) gebildet werden soll;
(c) Funktionalisieren (130) des in Schritt (b) definierten interessierenden Bereichs, wobei der Funktionalisierungsschritt umfasst:
Silanisierungsbehandlung des in Schritt (b) definierten interessierenden Bereichs, wobei die Silanisierungsbehandlung das Aufbringen mindestens eines Silanisierungsmittels auf den interessierenden Bereich umfasst; und
wobei die Silanisierungsbehandlung ferner einen nachfolgenden Schritt des Trocknens und/oder Aushärtens des interessierenden Bereichs umfasst;
(d) Aufbringen (140) einer Lösung, die eine Katalysatormetallquelle und ein Schutzmittel umfasst, auf den funktionalisierten definierten interessierenden Bereich, der aus Schritt (c) resultiert, um einen katalytisch aktiven definierten interessierenden Bereich zu erhalten; und
(e) Erzeugen (150) mindestens einer Temperaturmessschicht (7) über dem katalytisch aktiven definierten interessierenden Bereich, der aus Schritt (d) resultiert, durch stromloses Metallplattieren.

2. Verfahren nach Anspruch 1, wobei die elektrisch isolierende Schicht ein dielektrisches Material ist; bevorzugt ein dielektrisches Material, welches ein dielektrisches Keramikmaterial ist; mehr bevorzugt ein dielektrisches Material, das ein dielektrisches Keramikmaterial ist, ausgewählt aus der Gruppe, bestehend aus Al₂O₃, ZrO₂, Y₂O₃, MgO, Ti₂O₃, SiO₂, Borosilikatglas und beliebigen Gemischen davon.

3. Verfahren nach Anspruch 1 oder 2, das vor Schritt (b) einen Oberflächenbehandlungsschritt umfasst, der Folgendes umfasst:
Behandeln mindestens der beschichteten Oberfläche des Rohrs (1), die aus Schritt (a) resultiert, per Kugelstrahlen, Sandstrahlen, Kugelhämmern, Trommeln oder einer beliebigen Kombination davon; bevorzugtes Behandeln der beschichteten Oberfläche des Rohrs (1), die aus Schritt (a) resultiert, per Kugelstrahlen; bevorzugt Strahlbehandlung der beschichteten Oberfläche des Rohrs (1), die aus Schritt (a) resultiert, mit einem metallischen Schleifmittel, das aus der Gruppe ausgewählt ist, die aus Stahlkorn, Kupferkugeln und Aluminiumoxidpellets besteht; oder
Behandeln mindestens der beschichteten Oberfläche des Rohrs (1), das aus Schritt (a) resultiert, mit einer Säure mit einem pKa-Wert, der gleich oder kleiner als 4 ist, oder mit einer starken Base.

4. Verfahren nach einem der Ansprüche 1 bis 3, wobei das Lithographieverfahren in Schritt (b) ein Fotolithographieverfahren ist, welches die folgenden Schritte umfasst:
Erzeugen (121) oder Positionieren (121) einer Fotolackschicht auf einem Teil der beschichteten Oberfläche(n) des Rohrs (1), wobei die Fotolackschicht eine oberste Oberfläche umfasst, die am weitesten von dem/den beschichteten Substrat(en) des Rohrs (1) entfernt ist, und eine unterste Oberfläche, die mit dem/den beschichteten Substrat(en) des Rohrs (1) in Kontakt steht;
Positionieren (122) einer Maske auf der obersten Oberfläche der Fotolackschicht, wobei die Maske mindestens einen für UV-Licht undurchlässigen Abschnitt und mindestens einen für UV-Licht durchlässigen Abschnitt umfasst;
optisches Strukturieren (123) der Fotolackschicht durch einen Belichtungsschritt, wobei die Fotolackschicht durch die Maske hindurch mit UV-Licht belichtet wird;
Entfernen (124) der Maske; und
Entwickeln (125) der belichteten Fotolackschicht durch Aufbringen eines Fotolackentwicklungsmittels, um mindestens ein entfernbares Muster auf der/den beschichteten Oberfläche(n) des Rohrs (1) zu erzeugen, wobei das mindestens eine entfernbare Muster einen interessierenden Bereich definiert, in dem die Sensorschicht gebildet werden soll, wobei der interessierende Bereich mindestens eine strukturierte Öffnung in der belichteten Fotolackschicht umfasst, wobei die strukturierte Öffnung Seitenwände aufweist, die sich im Wesentlichen senkrecht zur beschichteten Oberfläche des Rohrs (1) erstrecken, und wobei die strukturierte Öffnung ferner einen untersten Bereich umfasst, der der/den beschichteten Oberfläche(n) des Rohrs (1) am nächsten liegt.

5. Verfahren nach einem der Ansprüche 1 bis 4, wobei das mindestens eine Silanisierungsmittel auf den interessierenden Bereich durch ein wässriges Sol-Gel-Verfahren oder durch Behandeln des interessierenden Bereichs mit einer Silanisierungsmittellösung, die das mindestens eine Silanisierungsmittel umfasst, aufgebracht wird; bevorzugt durch Behandeln des interessierenden Bereichs mit einer Silanisierungsmittellösung, welche das mindestens eine Silanisierungsmittel und ein Lösungsmittel, das mindestens ein organisches Lösungsmittel oder eine Mischung aus mindestens einem organischen Lösungsmittel und Wasser umfasst; bevorzugt durch Behandeln des interessierenden Bereichs mit einer Silanisierungsmittellösung, welche das mindestens eine Silanisierungsmittel und ein Lösungsmittel umfasst, welches mindestens einen Alkohol oder ein Gemisch aus mindestens einem Alkohol und Wasser umfasst.

6. Verfahren nach einem der Ansprüche 1 bis 5, wobei das Silanisierungsmittel ein Polyorganosilan ist, das mindestens eine Alkoxyendgruppe und eine organofunktionelle Endgruppe umfasst, welche eine Epoxygruppe, eine Aminogruppe, eine Acrylatgruppe oder eine Mercaptogruppe ist, wobei beide Endgruppen durch einen Linker verbunden sind.

7. Verfahren nach Anspruch 6, wobei das Polyorganosilan durch einen vorherigen Polymerisationsschritt eines Organosilans erhalten wird oder erhältlich ist; bevorzugt durch einen vorherigen Polymerisationsschritt eines Organosilans mit mindestens einer Hydroxylendgruppe und einer organofunktionellen Endgruppe, welche eine Epoxygruppe, eine Aminogruppe, eine Acrylatgruppe oder eine Mercaptogruppe ist; bevorzugt durch einen vorhergehenden Polymerisationsschritt eines Organosilans, das aus der Gruppe ausgewählt ist, die aus 3-Aminopropyltrimethoxysilan (APTMS), 3-Aminopropyltriethoxysilan (APTES), 4-Aminophenyltriethoxysilan, 3-(2,4-Dinitrophenylamino)propyl-triethoxysilan), N-(3-Triethoxysilylpropyl)-4,5-dihydroimidazol, (3-Glycidyloxy-propyl)trimethoxysilan (GPTMS), 3-Mercaptopropyltrimethoxysilan (MPTMS), und 3-(Trimethoxysilyl)propylmethacrylat (TMSPM) besteht.

8. Verfahren nach einem der Ansprüche 1 bis 7, wobei in Schritt (d) die Katalysatormetallquelle eine Palladiumquelle, eine Platinquelle, eine Silberquelle oder eine Goldquelle ist und/oder das Schutzmittel eine Sn(II)-Quelle, bevorzugt Zinn(II)-chlorid, umfasst.

9. Verfahren nach einem der Ansprüche 1 bis 8, wobei in Schritt (e) die stromlose Metallbeschichtung eine stromlose Kupferbeschichtung, eine stromlose Nickelbeschichtung, eine stromlose Goldbeschichtung oder eine stromlose Palladiumbeschichtung ist.

10. Verfahren nach einem der Ansprüche 1 bis 9, wobei in Schritt (e)
die stromlose Metallbeschichtung eine stromlose Kupferbeschichtung ist, welche den Schritt des Eintauchens mindestens des katalytisch aktiven definierten Bereichs, der aus Schritt (d) resultiert, in ein stromloses Kupferbeschichtungsbad umfasst, wobei das stromlose Kupferbeschichtungsbad eine Cu(II)-Quelle, ein Komplexierungsmittel und ein Reduktionsmittel umfasst; wobei das stromlose Kupferbeschichtungsbad bevorzugt einen pH-Wert im Bereich von 6 bis 14 aufweist; oder
die stromlose Metallbeschichtung eine stromlose Nickelbeschichtungung ist, welche den Schritt des Eintauchens zumindest des katalytisch aktiven definierten Bereichs, der aus Schritt (d) resultiert, in ein stromloses Nickelbeschichtungsbad umfasst, wobei das stromlose Nickelbeschichtungsbad eine Ni(II)-Quelle und ein Reduktionsmittel umfasst; wobei das stromlose Nickelbeschichtungsbad bevorzugt einen pH-Wert im Bereich von 8 bis 12 aufweist.

11. Verfahren nach einem der Ansprüche 1 bis 10, wobei das Verfahren ferner das Entfernen aller verbleibenden Teile des entfernbaren Musters von der beschichteten Oberfläche des Rohrs (1) umfasst, nachdem die mindestens eine Temperaturmessschicht (7) über dem katalytisch aktiven definierten interessierenden Bereich, der aus Schritt (d) resultiert, erzeugt wurde.

12. Verfahren nach einem der Ansprüche 1 bis 11, wobei das Verfahren ferner einen Schritt des Aufbringens einer Schutzbeschichtung (8) auf mindestens einen Teil der mindestens einen Temperaturmessschicht (7) umfasst; bevorzugt eine Schutzbeschichtung (8), die SiO₂, Al₂O₃, AIN, Si₃N₄, Zr₂O₃ oder eine beliebige Mischung davon umfasst.

13. Verfahren nach einem der Ansprüche 1 bis 12, wobei das Verfahren ferner das Bereitstellen mindestens eines Ausgangs- und mindestens eines Eingangs-Elektroanschlusses umfasst, wobei der mindestens eine Ausgangs- und der mindestens eine Eingangsanschluss bevorzugt an zwei gegenüberliegenden Enden der mindestens einen Temperaturmessschicht (7) positioniert sind.

14. Verfahren nach einem der Ansprüche 1 bis 13, wobei das Verfahren ein kontinuierliches Verfahren ist, bei dem das Rohr (1), auf dem die mindestens eine Temperaturmessschicht (7) hergestellt werden soll, durch eine Vielzahl miteinander verbundener Zonen geführt wird, wobei die Vielzahl miteinander verbundener Zonen umfasst:
eine erste Zone, in der der Lithographieprozess von Schritt (b) (120) durchgeführt wird, um mindestens ein entfernbares Muster auf einem Rohr (1) zu erzeugen, das mit mindestens einer elektrisch isolierenden Schicht beschichtet ist, wobei das mindestens eine entfernbare Muster den interessierenden Bereich definiert, in dem die Temperaturmessschicht (7) auf der beschichteten Oberfläche des Rohrs (1) erzeugt werden soll;
eine zweite Zone, in der der Funktionalisierungsschritt (c) (130) durch die Silanisierungsbehandlung durchgeführt wird, die das Aufbringen des mindestens einen Silanisierungsmittels auf den in Schritt (b) des Verfahrens definierten interessierenden Bereich umfasst, wobei das mindestens eine Silanisierungsmittel in einem Silanisierungslösungsbad bereitgestellt wird, wobei das Silanisierungslösungsbad auf den interessierenden Bereich aufgebracht wird oder der interessierende Bereich darin eingetaucht wird; und wobei die Silanisierungsbehandlung ferner einen nachfolgenden Schritt des Trocknens und/oder Aushärtens des interessierenden Bereichs umfasst;
eine dritte Zone, in der der katalytische Aktivierungsschritt (d) (140) durchgeführt wird, indem die Lösung, die die Katalysatormetallquelle und das Schutzmittel umfasst, auf den funktionalisierten definierten interessierenden Bereich aufgebracht wird, der aus Schritt (c) resultiert;
eine vierte Zone, in der der Schritt des stromlosen Metallplattierens (e) (150) durchgeführt wird;
optional eine fünfte Zone, die ein flüssiges Ätzbad umfasst, das darauf ausgelegt ist, nach der Bildung der mindestens einen Temperaturmessschicht (7) über dem katalytisch aktiven definierten Bereich, der aus Schritt (d) resultiert, alle verbleibenden Teile des entfernbaren Musters von der beschichteten Oberfläche des Rohrs (1) zu entfernen, wobei das flüssige Ätzbad mindestens ein Lösungsmittel zum Entfernen des Musters und optional ein weiteres alkalisches Mittel umfasst; und
optional eine sechste Zone, in der eine Schutzbeschichtung (8) auf der mindestens einen Temperaturmessschicht (7) ausgebildet wird, wobei die Schutzbeschichtung (8) bevorzugt durch physikalische Gasphasenabscheidung (PVD), insbesondere physikalische Gasphasenabscheidung durch reaktives Magnetron-Sputtern (PVD-RMS), chemische Gasphasenabscheidung (CVD) oder Sol-Gel-Abscheidung aufgetragen wird.

15. Rohr (1) aus einem elektrisch leitfähigen Material, wobei das Rohr (1) mindestens einen Widerstandstemperatursensor (3) auf mindestens einer seiner Oberflächen (4, 5) umfasst und das Rohr (1) durch das Verfahren nach einem der Ansprüche 1 bis 14 erhalten wird; wobei das elektrisch leitfähige Material bevorzugt ein leitfähiges metallisches Material oder ein leitfähiges Legierungsmaterial ist.

## Revendications

1. Procédé (100) de fourniture d'au moins un capteur de détection de température à résistance (3) sur au moins une surface (4, 5) d'un tuyau (1), dans lequel le tuyau (1) est constitué d'un matériau électriquement conducteur, et dans lequel le procédé (100) comprend les étapes de :
(a) fourniture (110) du tuyau (1), dans lequel au moins une partie de l'au moins une surface (4, 5) du tuyau (1) sur laquelle au moins une couche de détection de température (7) doit être fabriquée est ou a été revêtue d'au moins une couche électriquement isolante (6) pour former au moins une surface revêtue ;
(b) formation (120) d'un motif amovible sur l'au moins une surface revêtue du tuyau (1), par un procédé lithographique, dans lequel le motif amovible définit une zone d'intérêt dans laquelle au moins une couche de détection de température (7) doit être formée sur l'au moins une surface revêtue du tuyau (1) ;
(c) fonctionnalisation (130) de la zone d'intérêt définie à l'étape (b), dans laquelle l'étape de fonctionnalisation comprend :
la soumission de la zone d'intérêt définie à l'étape (b) à un traitement de silanisation, dans lequel le traitement de silanisation comprend l'application d'au moins un agent de silanisation sur la zone d'intérêt ; et
dans lequel le traitement de silanisation comprend en outre une étape subséquente de séchage et/ou de durcissement de la zone d'intérêt ;
(d) dépôt (140) d'une solution comprenant une source de métal catalyseur et un agent protecteur sur la zone d'intérêt définie et fonctionnalisée résultant de l'étape (c) afin d'obtenir une zone d'intérêt définie catalytiquement active ; et
(e) formation (150) d'au moins une couche de détection de température (7) sur la zone d'intérêt définie catalytiquement active résultant de l'étape (d), par déposition autocatalytique de métal.

2. Procédé selon la revendication 1, dans lequel la couche électriquement isolante est un matériau diélectrique ; de préférence un matériau diélectrique qui est un matériau céramique diélectrique ; plus préférablement un matériau diélectrique qui est un matériau céramique diélectrique choisi dans le groupe constitué par Al₂O₃, ZrO₂, Y₂O₃, MgO, Ti₂O₃, SiO₂, du verre borosilicaté, et tout mélange de ceux-ci.

3. Procédé selon la revendication 1 ou 2, comprenant en outre, avant l'étape (b), une étape de traitement de surface qui comprend :
la soumission d'au moins la surface revêtue du tuyau (1) résultant de l'étape (a) à un grenaillage, un sablage, un grenaillage de précontrainte, un polissage au tonneau, ou toute combinaison de ceux-ci ; de préférence, la soumission de la surface revêtue du tuyau (1) résultant de l'étape (a) à un grenaillage ; plus préférablement, la soumission de la surface revêtue du tuyau (1) résultant de l'étape (a) à un grenaillage avec un matériau abrasif métallique choisi dans le groupe constitué par la grenaille d'acier, les grains de cuivre et les granules d'oxyde d'aluminium ; ou
le traitement d'au moins la surface revêtue du tuyau (1) résultant de l'étape (a) avec un acide ayant une valeur pKa qui est égale ou inférieure à 4 ou avec une base forte.

4. Procédé selon l'une quelconque des revendications 1 à 3, dans lequel le procédé lithographique de l'étape (b) est un procédé photolithographique qui comprend les étapes suivantes :
la formation (121) ou le positionnement (121) d'une couche de résine photosensible sur une partie de la ou des surfaces revêtues du tuyau (1), ladite couche de résine photosensible comprenant une surface supérieure la plus éloignée du ou des substrats revêtus du tuyau (1) et une surface inférieure en contact avec le ou les substrats revêtus du tuyau (1) ;
le positionnement (122) d'un masque sur la surface supérieure de la couche de résine photosensible, dans lequel le masque comprend au moins une partie qui est opaque à la lumière UV, et au moins une partie qui est transparente à la lumière UV ;
la structuration optique (123) de la couche de résine photosensible en la soumettant à une étape d'exposition, dans laquelle la couche de résine photosensible est exposée à la lumière UV à travers le masque ;
l'élimination (124) du masque ; et
le développement (125) de la couche de résine photosensible exposée, par application d'un agent de développement de résine photosensible, de manière à fournir au moins un motif amovible sur la ou les surfaces revêtues du tuyau (1), dans lequel l'au moins un motif amovible définit une zone d'intérêt dans laquelle la couche de détection doit être formée, dans laquelle la zone d'intérêt comprend au moins une ouverture structurée dans la couche de résine photosensible exposée, dans laquelle l'ouverture structurée a des parois latérales qui s'étendent sensiblement perpendiculairement à la surface revêtue du tuyau (1), et dans laquelle l'ouverture structurée comprend en outre une région inférieure la plus proche de la ou des surfaces revêtues du tuyau (1).

5. Procédé selon l'une quelconque des revendications 1 à 4, dans lequel l'au moins un agent de silanisation est appliqué sur la zone d'intérêt par un procédé sol-gel aqueux ou par traitement de la zone d'intérêt avec une solution d'agent de silanisation comprenant l'au moins un agent de silanisation ; de préférence par traitement de la zone d'intérêt avec une solution d'agent de silanisation comprenant l'au moins un agent de silanisation et un solvant qui comprend au moins un solvant organique, ou un mélange d'au moins un solvant organique et d'eau ; de préférence par traitement de la zone d'intérêt avec une solution d'agent de silanisation comprenant l'au moins un agent de silanisation et un solvant qui comprend au moins un alcool, ou un mélange d'au moins un alcool et d'eau.

6. Procédé selon l'une quelconque des revendications 1 à 5, dans lequel l'agent de silanisation est un polyorganosilane comprenant au moins un groupe terminal alcoxy et un groupe terminal organofonctionnel qui est un groupe époxy, un groupe amino, un groupe acrylate ou un groupe mercapto, dans lequel les deux groupes terminaux sont reliés par un lieur.

7. Procédé selon la revendication 6, dans lequel le polyorganosilane est obtenu ou peut être obtenu par une étape de polymérisation préalable d'un organosilane ; de préférence par une étape de polymérisation préalable d'un organosilane ayant au moins un groupe terminal hydroxyle et un groupe terminal organofonctionnel qui est un groupe époxy, un groupe amino, un groupe acrylate ou un groupe mercapto ; plus préférablement par une étape de polymérisation préalable d'un organosilane qui est choisi dans le groupe constitué par le 3-aminopropyltriméthoxysilane (APTMS), le 3-aminopropyltriéthoxysilane (APTES), le 4-aminophényltrietoxysilane, le 3-(2,4-dinitrophénylamino)propyltriéthoxysilane), le N-(3-triéthoxysilylpropyl)-4,5-dihydroimidazole, le (3-glycidyloxypropyl)triméthoxysilane (GPTMS), le 3-mercaptopropyltriméthoxysilane (MPTMS) et le 3-(triméthoxysilyl)propylméthacrylate (TMSPM).

8. Procédé selon l'une quelconque des revendications 1 à 7, dans lequel, à l'étape (d), la source de métal catalyseur est une source de palladium, une source de platine, une source d'argent ou une source d'or ; et/ou l'agent protecteur comprend une source de Sn(II), de préférence du chlorure stanneux.

9. Procédé selon l'une quelconque des revendications 1 à 8, dans lequel, à l'étape (e), la déposition autocatalytique de métal est une déposition autocatalytique de cuivre, une déposition autocatalytique de nickel, une déposition autocatalytique d'or ou une déposition autocatalytique de palladium.

10. Procédé selon l'une quelconque des revendications 1 à 9, dans lequel, à l'étape (e),
la déposition autocatalytique de métal est une déposition autocatalytique de cuivre, qui comprend l'étape d'immersion d'au moins la zone définie catalytiquement active résultant de l'étape (d) dans un bain de déposition autocatalytique de cuivre, dans lequel le bain de déposition autocatalytique de cuivre comprend une source de Cu(II), un agent complexant et un agent réducteur ; de préférence dans lequel le bain de déposition autocatalytique de cuivre a un pH compris entre 6 et 14 ; ou
la déposition autocatalytique de métal est une déposition autocatalytique de nickel qui comprend l'étape d'immersion d'au moins la zone définie catalytiquement active résultant de l'étape (d) dans un bain de déposition autocatalytique de nickel, dans lequel le bain de déposition autocatalytique de nickel comprend une source de Ni(II) et un agent réducteur ; de préférence dans lequel le bain de déposition autocatalytique de nickel a un pH compris entre 8 et 12.

11. Procédé selon l'une quelconque des revendications 1 à 10, dans lequel le procédé comprend en outre l'élimination de toute partie restante du motif amovible de la surface revêtue du tuyau (1), après la formation de l'au moins une couche de détection de température (7) sur la zone d'intérêt définie catalytiquement active résultant de l'étape (d).

12. Procédé selon l'une quelconque des revendications 1 à 11, dans lequel le procédé comprend en outre une étape d'application d'un revêtement protecteur (8) sur au moins une partie de l'au moins une couche de détection de température (7) ; de préférence un revêtement protecteur (8) comprenant du SiO₂, de l'Al₂O₃, de l'AIN, du Si₃N₄, du Zr₂O₃ ou tout mélange de ceux-ci.

13. Procédé selon l'une quelconque des revendications 1 à 12, dans lequel le procédé comprend en outre la fourniture d'au moins une borne électrique de sortie et d'au moins une borne électrique d'entrée, dans laquelle l'au moins une borne électrique de sortie et l'au moins une borne électrique d'entrée sont de préférence positionnées sur deux extrémités opposées de l'au moins une couche de détection de température (7).

14. Procédé selon l'une quelconque des revendications 1 à 13, dans lequel le procédé est un procédé continu dans lequel le tuyau (1) sur lequel l'au moins une couche de détection de température (7) doit être fabriquée est amené à passer à travers une pluralité de zones interconnectées, dans lequel la pluralité de zones interconnectées comprend :
une première zone dans laquelle le procédé lithographique de l'étape (b) (120) est effectué pour former au moins un motif amovible sur un tuyau (1) revêtu d'au moins une couche électriquement isolante, dans lequel l'au moins un motif amovible définit la zone d'intérêt dans laquelle la couche de détection de température (7) doit être formée sur la surface revêtue du tuyau (1) ;
une deuxième zone dans laquelle l'étape de fonctionnalisation (c) (130) est effectuée par le traitement de silanisation qui comprend l'application de l'au moins un agent de silanisation sur la zone d'intérêt définie à l'étape (b) du procédé, dans lequel l'au moins un agent de silanisation est fourni dans un bain de solution de silanisation, dans lequel le bain de solution de silanisation est appliqué sur la zone d'intérêt, ou la zone d'intérêt est immergée dans celui-ci ; et dans lequel le traitement de silanisation comprend en outre une étape subséquente de séchage et/ou de durcissement de la zone d'intérêt ;
une troisième zone dans laquelle l'étape d'activation catalytique (d) (140) est effectuée par déposition de la solution comprenant la source de métal catalyseur et l'agent protecteur sur la zone d'intérêt définie et fonctionnalisée résultant de l'étape (c) ;
une quatrième zone dans laquelle l'étape (e) (150) de déposition autocatalytique de métal est effectuée ;
éventuellement une cinquième zone comprenant un bain de décapage liquide par attaque chimique adapté pour effectuer l'élimination de toute partie restante du motif amovible de la surface revêtue du tuyau (1) après la formation de l'au moins une couche de détection de température (7) sur la zone définie catalytiquement active résultant de l'étape (d), ledit bain de décapage liquide par attaque chimique comprenant au moins un solvant pour éliminer le motif, et comprenant éventuellement en outre au moins un agent alcalin ; et
éventuellement une sixième zone, dans lequel un revêtement protecteur (8) est formé sur l'au moins une couche de détection de température (7), de préférence dans lequel le revêtement protecteur (8) est déposé par dépôt physique en phase vapeur (PVD), en particulier par dépôt physique en phase vapeur par pulvérisation magnétron réactive (PVD-RMS), par dépôt chimique en phase vapeur (CVD) ou par dépôt sol-gel.

15. Tuyau (1) constitué d'un matériau électriquement conducteur, dans lequel le tuyau (1) comprend au moins un capteur de détection de température à résistance (3) sur au moins une de ses surfaces (4, 5), et le tuyau (1) est obtenu par le procédé selon l'une quelconque des revendications 1 à 14 ; de préférence dans lequel le matériau électriquement conducteur est un matériau métallique conducteur ou un matériau en alliage conducteur.
